# FASCICULE DE BREVET EUROPEEN

(11) **EP 0 793 171 B1**
(45) Date de publication et mention de la délivrance du brevet: **15.05.2002**
(21) Numéro de dépôt: 97400441.8
(22) Date de dépôt: 27.02.1997
(51) Int. Cl.: G06F 9/445

(54) **Système de configuration de logiciels préconfigurés sur des systèmes ouverts en réseau dans un environnement distribué et procédé mis en oeuvre par un tel système**
System zur Konfiguration von vorkonfigurierten Programmen auf vernetzten offenen Systemen in einer verteilten Umgebung und Verfahren zur Durchführung dieses Systems
System for configuration of preconfigured software programs on networked open systems in a distributed environment and method to operate this system

(30) Priorité: 01.03.1996 FR 9602641
(43) Date de publication de la demande: 03.09.1997
(73) Titulaire: BULL S.A., 78430 Louveciennes (FR)
(72) Inventeur: Gibello, Pierre-Yves, 38100 Grenoble (FR); Albrecht, Alain, 38400 Saint Martin D'Heres (FR); Richoux, Bruno, 38410 Uriage (FR); Fleurisson, Marc, 38250 Lans En Vercors (FR); Sehabiague, Bruno, 38250 Saint Nizier Du Moucherotte (FR)
(74) Mandataire: Debay, Yves

(56) Documents cités:
- EP-A- 0 398 644
- EP-A- 0 509 945
- WO-A-95/14969
- US-A- 5 414 812
- IBM TECHNICAL DISCLOSURE BULLETIN, vol. 34, no. 1, 1 Juin 1991, pages 430-434, XP000210264 "GRAPHIC APPC CONFIGURATION INTERFACE"
- CHIP ZEITSCHRIFT FUER MIKROCOMPUTER-TECHNIK, no. 11, 1 Novembre 1991, pages 112-114, 116, XP000266204 VIETEN M: "AUF ZUM FROEHLICHEN FENSTERLN"

## Description

La présente invention concerne un système de configuration de logiciels sur des systèmes ouverts en réseau dans un environnement distribué. Elle concerne également un procédé mis en oeuvre par ledit système.

De manière générale, en informatique et en particulier avec les réseaux complexes de systèmes distribués, il est apparu indispensable de prévoir et organiser des ensembles de services d'utilisation simple, conviviale et efficace et notamment proposer des services de configuration de logiciels sur les plates-formes de cet environnement réparti qui soient puissants mais souples et rapides à mettre en oeuvre. Un tel environnement est en effet, de nos jours, couramment exploité et, il est connu qu'utiliser une informatique ouverte et distribuée présente d'énormes avantages puisqu'il est alors permis à un client, c'est-à-dire l'utilisateur d'une interface, d'accéder aisément aux différentes données de tels systèmes ou machines quelle que soit la situation géographique dudit utilisateur et quelle que soit le système sur lequel résident les données. Cependant, si l'utilisateur désire profiter de ces avantages durant la phase d'exploitation, il souhaite également, que les phases de configuration et d'installation soient aussi facilitées et ceci pour toutes sortes de déploiements. Par configuration, il est ici entendu la manipulation de paramètres d'une machine tels que l'adresse, le nom de l'utilisateur, la taille des registres tampons, les données relatives aux paramètres de configuration des logiciels, etc..

Jusqu'à présent, des outils tels que SMIT (System Management Interface Tool) ou DSMIT (Distributed System Management Interface Tool) étaient utilisés pour configurer des logiciels sur des plates-formes UNIX (marque déposée aux US et dans d'autres pays, licenciée exclusivement par l'intermédiaire de X/OPEN Company Limited) supportant le système d'exploitation AIX (marque d'IBM Corp.). Cependant, à l'usage, il apparaît que ces outils présentent d'importants inconvénients. En effet, si l'outil SMIT permet de travailler pendant les phases d'installation, de configuration et d'exploitation, son utilisation est néanmoins limitée aux systèmes locaux, tels qu'un serveur et donc à une seule machine, n'étant pas conçu pour prendre en compte, ni l'aspect réseau, ni l'aspect distribué, ce qui le rend totalement inefficace pour des applications relatives à des systèmes en réseau en environnement distribué. L'outil DSMIT, quant à lui, a les mêmes caractéristiques que l'outil SMIT à ceci près cependant, qu'il permet de prendre en compte l'aspect distribué, mais il s'avère inefficace pour traiter l'aspect réseau. Ainsi avec l'outil DSMIT il sera, par exemple, possible de configurer plusieurs machines en même temps mais avec une même adresse, ce qui est, il faut en convenir, très rarement le cas dans un réseau.

Pour configurer des logiciels de communication sur des plates-formes, une autre solution peut également être utilisée qui consiste à appliquer une méthode de répartition ou de distribution de logiciel courament appelée par l'homme du métier "software distribution". Une telle méthode est généralement utilisée par des administrateurs de systèmes de gestion ou d'administration centralisés pour diffuser des logiciels sur différentes plates-formes administrées. Dans ce cas, il est possible de réaliser une installation et à la fin de cette installation d'émettre une information (appelée "script" par l'homme du métier et qui est en fait un petit programme de personnalisation) renfermant des instructions de configuration. Cependant, pour autoriser une telle configuration, cette information qui n'est pas créée ou construite automatiquement, doit préalablement être décrite et entrée par un utilisateur, ce qui manque assurément de simplicité et de convivialité. De plus, la syntaxe de ces scripts doit obéir à des règles strictes et contraignantes, notamment pour soutenir la caractéristique de ré-entrance. La ré-entrance fait, en effet, appel à une notion intelligente, car le script, pour cela, doit savoir distinguer entre un premier lancement et un lancement subséquent, sachant que le résultat doit rester invariant, tandis que l'action dépend de l'état initial de l'environnement au lancement du script.

Le document EP 509 945 traite de l'administration à distance de stations de travail couplées à un ordinateur hôte. Les informations de configuration sont nécessairement stockées sur l'ordinateur hôte, et peuvent être téléchargées sur l'initiative de la station à configurer. II existe donc dans ce dispositif un couplage fort entre les stations à configurer et l'ordinateur hôte dépositaire des informations de configuration. Ce document est limité à la configuration de systèmes dans le cas d'un ordinateur hôte travaillant avec des stations de travail couplées.

La présente invention a pour but de remédier aux divers inconvénients des différents systèmes ou outils et méthodes de l'art antérieur connus et propose un système de configuration de logiciels sur des systèmes ouverts, convivial, et offrant une solution, globale, efficace, automatique et donc aisée à mettre en oeuvre, aux problèmes posés par la configuration de systèmes en réseau dans un environnement distribué.

Pour cela, le système de configuration de logiciels mentionné dans le préambule est remarquable en ce qu'il est constitué, d'une part sur une station de travail, d'un dispositif de conception appelé concepteur, d'un éditeur et d'une base de connaissances, et d'autre part sur une station à configurer d'un interpréteur, le concepteur permettant d'accéder en lecture et écriture à la base de connaissances contenant les données décrivant les différents éléments du réseau qui peuvent être configurés et les liaisons entre ces différents éléments, ledit concepteur permettant de définir les différentes possibilités de configuration de l'éditeur sur lequel est visualisée la configuration désirée, éditeur qui utilise les informations de la base de connaissances relatives à la topologie du réseau et les paramètres de configuration des différents éléments composant le réseau pour construire une entité homogène configurable et chargeable, à l'aide de moyens de chargement, sur la station à configurer dans laquelle l'interpréteur exécute les opérations de configuration en transformant les paramètres de configuration initiaux en des paramètres propres à la configuration désirée également utilisables par l'éditeur, ledit système mettant en oeuvre un procédé de configuration de logiciels préconfigurés.

De manière préférée le système de configuration de logiciels préconfigurés est remarquable en ce que le concepteur utilise une interface utilisateur graphique du type "Windows" qui permet de définir de nouvelles classes de plates-formes et de nouvelles classes de composants de systèmes pour étendre les informations de la base de connaissances utilisées par l'éditeur, en offrant pour cela la possibilité de définir, modifier ou supprimer des classes de plates-formes, également de définir, modifier ou supprimer des classes de composants de systèmes et les feuilles d'informations associées à ces classes et enfin relativement aux classes de composants, de définir, modifier ou supprimer des informations des classes de plates-formes relatives à la configuration désirée.

De même, le système de configuration de logiciels préconfigurés est remarquable en ce que l'éditeur utilise une interface utilisateur graphique du type "Windows" qui, en premier lieu, fournit des moyens graphiques à l'utilisateur pour construire à l'écran une topologie du réseau représentant l'ensemble des systèmes hétérogènes avec leurs interconnexions, pour chaque système représenté une feuille ou un ensemble de feuilles d'informations de configuration étant rempli, qui également fournit des mécanismes de sauvegarde, d'ouverture et de restauration des configurations définies par l'utilisateur ainsi que des mécanismes de gestion de l'unicité d'un objet à travers le réseau représenté, qui de plus, pour une configuration spécifiée par l'utilisateur, génère un ensemble de fichiers de configuration dans un format déterminé, ces fichiers étant utilisés pour générer une information de configuration qui est exécutée sur la plate-forme désirée configurée et qui enfin, à partir d'un ensemble de fichiers de configuration récupéré sur une plate-forme configurée, extrait la configuration réelle désirée de cette plate-forme.

Egalement, le système de configuration de logiciels préconfigurés est remarquable en ce que l'interpréteur d'une part, lit les fichiers de configuration générés par l'éditeur dans le format déterminé en faisant la différence entre une première configuration, une reconfiguration ou une déconfiguration, puis convertit lesdits fichiers en directives de configuration pour la plate-forme sur laquelle il est situé et enfin effectue la configuration désirée de cette plate-forme et d'autre part, lit la configuration effective de la plate-forme, puis génère les fichiers de configuration dans le format déterminé contenant les informations de configuration des composants de cette plate-forme, lesdits fichiers de configuration étant alors utilisables par l'éditeur.

Ainsi ce système qui s'inscrit dans une technologie orientée-objet autorise une configuration automatique de logiciels sur des serveurs ou machines travaillant dans des environnements complexes en mode client-serveur selon une architecture distribuée et offre un service de configuration global aux utilisateurs désirant déployer rapidement un grand nombre de systèmes à partir d'un seul point. En effet, selon l'idée de l'invention, à partir d'un seul point, d'une même console d'une station de travail, il est possible de préparer une configuration de référence qui peut être dupliquée sur différentes machines, ou de configurer de manière spécifique une quelconque station, c'est-à-dire machine ou plate-forme, d'un ensemble hétérogène sur le réseau, l'interpréteur, de manière intelligente, à la différence de ce qui se passait dans l'art antérieur, se chargeant de discriminer automatiquement entre les paramètres initiaux de configuration et les paramètres propres à la configuration désirée en choisissant de manière adéquate ces derniers. Cette configuration désirée de la plate-forme est ici préparée sur la console d'un microordinateur en utilisant une application conviviale du type "Windows" pour remplir une ou plusieurs fiches ou "feuilles" d'informations sur l'écran relative à la topologie et aux différents paramètres désirés, et ceci tout simplement par sélection sur l'écran pour dessiner la topologie du réseau, fixer des paramètres tels que le site, la machine, les connexions, les adresses, les ports, les options, etc., et ainsi créer l'image de la configuration souhaitée, diffusée, après génération d'un fichier de configuration, vers la machine sur laquelle elle sera chargée pour être exécutée, l'interpréteur permettant ce chargement et faisant avantageusement la différence entre ce qui existe et ce qui est désiré, alors qu'en outre, cette configuration peut être contrôlée et consultée à partir du microordinateur. Il peut être ici insisté sur "l'intelligence" de l'interpréteur qui est capable d'identifier la configuration présente et en fonction de la configuration transmise désirée, de reconnaître s'il s'agit d'une première configuration, d'une reconfiguration ou encore d'une déconfiguration pour effectuer alors la commande appropriée. Il est aussi possible de configurer de manière automatique des serveurs similaires pour compléter ou modifier une infrastructure, simplement à partir de moyens de chargement tels qu'une disquette, des moyens électroniques utilisant le transfert de fichiers, ou encore des services communs sur un réseau du type TCP/IP (Transmission Control Protocol/Intemet Protocol). Grâce à ce nouveau concept homogène et centralisé de configuration par commande, l'ouverture à de nouveaux objets configurables est autorisée facilitant tout déploiement ou migration aujourd'hui non permis, y compris le déploiement d'applications d'un client intégrateur de service. Cette dernière caractéristique d'extensibilité est rendue possible du fait que des dialogues de configuration et des commandes spécifiques peuvent être aisément créés et qu'ainsi de nouveaux objets peuvent être ajoutés via le concepteur dont c'est précisément l'objet. Une telle avantageuse convivialité était jusqu'à présent interdite aux réseaux de systèmes hétérogènes en environnement distribué. De nombreux avantages se dégagent du fait de la matérialisation de l'idée de l'invention, parmi lesquels l'extrême simplicité d'utilisation et d'application des procédures de configuration, tandis qu'une meilleure visibilité de la configuration installée est offerte, le graphique de ladite configuration étant directement affichée sur l'écran. Egalement, le temps d'apprentissage pour l'utilisation de telles procédures ainsi donc que le savoir-faire nécessaire à leur exécution peuvent être considérablement réduits et ceci même relativement à un large déploiement de systèmes à, ou à ne pas, dupliquer dans des sites aléatoirement et géographiquement distribués. De plus, la productivité et l'efficacité sont très nettement améliorées puisque l'administrateur permet de configurer facilement et rapidement les systèmes en réseau sans oublier que l'automatisation du processus et les possibilités de duplication sont bien supérieures permettant ainsi de réduire les coûts et les délais. Une configuration globale cohérente associée au fait qu'une plus faible technicité est requise pour installer le logiciel implique nécessairement, pour l'administrateur, un meilleur contrôle de la gestion du déploiement des systèmes, ce qui a pour principal effet d'améliorer la fiabilité de l'ensemble. En outre, une très grande autonomie est autorisée à un client utilisateur qui, achetant un progiciel, pourra l'installer lui-même et ceci de manière immédiate, car il n'aura plus besoin systématiquement d'une assistance technique. Enfin, avantageusement, dans cet environnement complexe en mode client-serveur, l'éditeur fournit des mécanismes puissants et pratiques tels que notamment des mécanismes de gestion de l'unicité d'un objet et donc de données à travers le réseau représenté, ainsi, par exemple, une adresse d'un serveur distribuée sur le réseau peut être mise à jour simultanément sur l'ensemble dudit réseau.

Pour cela, de manière avantageuse, le système selon l'invention met en oeuvre un procédé de configuration de logiciels préconfigurés remarquable en ce qu'il est divisé en une pluralité de sous-procédés, un sous-procédé d'édition de la base de connaissances permettant à un utilisateur d'une station de travail d'accéder à la base de connaissances pour créer, éditer, modifier et enregistrer ladite base, un sous-procédé de détermination de la configuration permettant à un utilisateur d'une station de travail de construire une configuration désirée, un sous-procédé d'actualisation de la configuration désirée sur la station à configurer, un sous-procédé d'analyse et de contrôle de la configuration sur la station configurée et enfin un sous-procédé d'exploration de la configuration d'une station configurée à partir d'une station de travail.

Ainsi le procédé de configuration mis en oeuvre par le système selon l'invention est fractionné en plusieurs sous-procédés. Un premier sous-procédé d'édition de la base de connaissances qui est indépendant des autres sous-procédés et qui permet de construire une base de connaissances, de la modifier et de la faire évoluer à volonté. Un second sous-procédé de détermination de la configuration qui, une fois exécuté sur la station de travail est suivi du troisième sous-procédé d'actualisation de la configuration pour réaliser effectivement par et sur la plate-forme à configurer ladite configuration. Enfin, un quatrième sous-procédé d'analyse et de contrôle de la configuration sur une station configurée, qui une fois exécuté sur cette station est suivi d'un cinquième sous-procédé d'exploration de la configuration de la station configurée à partir d'une station de travail permettant d'extraire et de récupérer effectivement la configuration de cette station configurée.

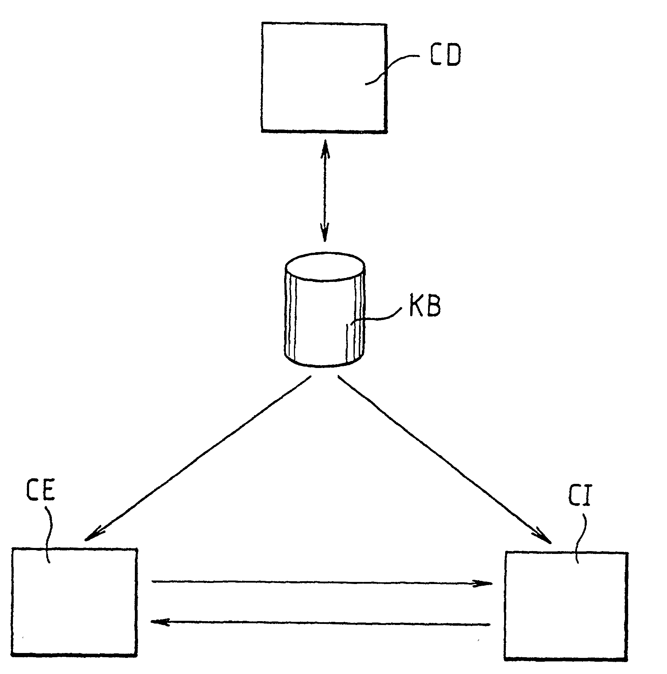

La description suivante en regard du dessin annexé, le tout donné à titre d'exemple non limitatif, fera bien comprendre comment l'invention peut être réalisée.

La figure unique représente de manière schématique les éléments formant le système de configuration de logiciels préconfigurés sur des systèmes ouverts selon l'invention.

Pour une meilleure appréhension de l'idée de l'invention, quelques généralités et définitions sont ci-après proposées qui permettront de replacer ladite invention dans son contexte et de comprendre avec précision le vocabulaire employé. Le système de configuration de logiciels préconfigurés a été conçu pour apporter une solution simple, peu onéreuse et efficace aux problèmes complexes rencontrés lorsqu'il est désiré réaliser la migration et/ou le déploiement ainsi que la mise à jour d'un grand nombre, de préférence supérieur ou égal à dix, de systèmes hétérogènes en réseau dans un environnement distribué. Ce système de configuration permet donc de déployer rapidement et de manière aisée ce grand nombre de systèmes ou serveurs interconnectés car il fournit un environnement de configuration autorisant la préparation de la configuration de logiciels hors du ou des sites administrés sur lesquels se trouvent les systèmes à configurer en offrant des possibilités de duplications sur la pluralité de sites concernés et de paramétrisations répétitives et automatiques. Dans la suite, le terme "composant" doit être assimilé à une entité physique ou logique d'un système informatique telle que du matériel, un logiciel ou encore un microprogramme, l'objet du système selon l'invention étant de configurer des composants. Un composant est défini par une "classe" constituée d'un nom unique et d'un ensemble d'attributs qui, en commun, définissent l'information de configuration disponible, chaque attribut représentant une partie de l'information de configuration. Les attributs décrivant la configuration d'une même fonctionnalité sont réunis en groupes dits fonctionnels pour être facilement référencés. La feuille ou fiche d'informations de configuration est, pour l'utilisateur, la vue, c'est-à-dire la matérialisation sur l'écran, d'un groupe fonctionnel, et, c'est en fait, à l'aide de cette feuille et en la remplissant, que l'utilisateur précise les informations nécessaires à la configuration d'un groupe fonctionnel d'un composant. Les composants définissent la configuration des systèmes hétérogènes tels que les unités centrales de traitement, les stations de travail de type PC ou les plates-formes UNIX. Chaque système peut comporter un nombre quelconque de composants de différentes classes. Chaque groupe fonctionnel d'une classe de composants peut être instancié plus d'une fois, pour décrire des instances multiples d'une partie d'un composant. Par convention, un groupe fonctionnel est dit, "scalaire" lorsqu'il n'est instancié qu'une seule fois, ou "tabulaire" lorsqu'il peut être instancié plus d'une fois. Les différents systèmes sont connectés à leur réseau d'appartenance par l'intermédiaire de "liaisons" soit point à point (par exemple, liaison X25) soit multipoint ou fédératives (par exemple, Ethernet, FDDI, "token ring"). Pour préciser, une liaison point à point permet de connecter un système à un autre système ou un système à une liaison fédérative, alors qu'une liaison fédérative est connectée à un ensemble de systèmes par l'intermédiaire d'une liaison point à point.

Sur la figure unique sont représentés les différents éléments composant le système de configuration de logiciels préconfigurés conforme à l'invention. Ce système est constitué, d'une part sur une station de travail (non représentée), d'un dispositif de conception CD appelé concepteur, d'un éditeur CE et d'une base de connaissances KB, et d'autre part sur une station à configurer (non représentée) d'un interpréteur Cl, le concepteur CD permettant d'accéder en lecture et écriture à la base de connaissances KB contenant les données décrivant les différents éléments du réseau qui peuvent être configurés et les liaisons entre ces différents éléments (systèmes, composants, groupes fonctionnels, etc.), ledit concepteur permettant de définir les différentes possibilités de configuration de l'éditeur CE sur lequel est visualisée la configuration désirée, éditeur qui utilise les informations de la base de connaissances KB relatives à la topologie du réseau et les paramètres de configuration des différents éléments composant le réseau pour construire une entité homogène configurable et chargeable, à l'aide de moyens de chargement (disquette, moyens électroniques utilisant le transfert de fichiers, ou encore services communs sur un réseau du type TCP/IP), sur la station à configurer dans laquelle l'interpréteur exécute les opérations de configuration en transformant les paramètres de configuration initiaux en des paramètres propres à la configuration désirée également utilisables par l'éditeur CE, ledit système mettant en oeuvre un procédé de configuration de logiciels préconfigurés.

Dans cette perspective, le concepteur CD se trouvant sur la station de travail de type PC, est conçu comme une interface graphique utilisateur de type Windows et permet de déterminer de manière simple ce qui peut être configuré par l'éditeur CE. En fait, l'éditeur CE exploite un ensemble de ressources bien défini, alors que l'utilisateur, pendant que l'éditeur exécute ses tâches de configuration, manipule d'une part les classes de plates-formes, chaque classe de plates-formes ayant pour objet de définir un type de système, et d'autre part les composants. L'utilisateur manipule les composants par l'intermédiaire des feuilles d'informations de configuration, les définitions des composants étant stockées dans les classes de composants. Une fonction importante concerne les possibilités d'extension du système de configuration, par ajout, modification ou suppression d'objets dans la base de connaissances KB, le concepteur permettant de définir de nouvelles classes de plates-formes et de nouvelles classes de composants autorisant ainsi l'extension de la base de connaissances KB utilisée par l'éditeur CE. Pour cela, le concepteur CD offre différentes possibilités parmi lesquelles celles de définir, modifier ou supprimer des classes de plates-formes, et également de définir, modifier ou supprimer des classes de composants de systèmes et les feuilles d'informations associées à ces classes, ces informations étant principalement utilisées par l'éditeur CE. Enfin, relativement aux classes de composants, il offre la possibilité de définir, modifier ou supprimer des informations concernant les mécanismes de configuration désirée agissant sur les classes de plates-formes, ces informations étant principalement utilisées par les interpréteurs Cl sur les stations à configurer. Ce type de mécanisme, appelé ci-après "instrumentation de composant", spécifie la manière de configurer une classe de composants et correspond en fait à une interface utilisée pour fixer (set), test d'installation ou de robustesse, ou lire (get), test d'inventaire ou d'analyse des informations de configuration relatives à un composant matériel ou logiciel ou encore à une feuille d'information concernant un groupe fonctionnel scalaire ou tabulaire. Il est également important de noter que la notion de composant logiciel configurable est à rapprocher de celle de produit logiciel installable.

De même, l'éditeur CE se trouvant sur la station de travail de type PC, est conçu comme une interface graphique utilisateur de type Windows et permet de traiter les informations de configuration relativement à un ensemble de composants défini. Ces principales fonctionnalités consistent en premier lieu, à fournir des moyens graphiques à l'utilisateur pour construire à l'écran une topologie du réseau contenant un quelconque ensemble de systèmes hétérogènes interconnectés, et pour chaque système représenté, une feuille ou un ensemble de feuilles d'informations de configuration est rempli avec les informations relatives aux composants faisant partie de ce système. Le résultat de cette opération de construction visualisable est la configuration (systèmes et liaisons). L'éditeur est également prévu pour fournir des mécanismes de sauvegarde, d'ouverture et de restauration des configurations définies par l'utilisateur ainsi que des mécanismes de gestion de l'unicité d'un objet à travers le réseau représenté autorisant à ne rentrer qu'une et une seule fois une même partie d'information de configuration. De plus, pour une configuration spécifiée par l'utilisateur, l'éditeur permet de génèrer un ensemble de fichiers de configuration dans un format déterminé. De manière préférée, le fichier utilisé est de format MIF (Management Interface Format) normalisé par le consortium DMTF (Desktop Management Task Force), format qui permet de décrire des composants matériel ou logiciel en termes d'objets et d'attributs. Ces fichiers sont utilisés pour générer une information de configuration qui est exécutée sur la plate-forme désirée configurée. Il est à noter que bien que ces informations de configuration sont différentes d'une plate-forme à une autre, les mêmes fichiers générés par l'éditeur, pour une configuration donnée, sont utilisés pour générer les informations de configuration pour toutes les plates-formes concernées par cette configuration. Enfin, à partir d'un ensemble de fichiers de configuration récupéré sur une plate-forme configurée, l'éditeur permet d'extraire la configuration réelle de cette plate-forme, c'est-à-dire, que les feuilles d'informations de configuration des composants de la plate-forme peuvent être éditées en utilisant l'éditeur et que, lorsqu'elle est introduite dans une configuration, la plate-forme est connectée de manière adéquate aux autres éléments de cette configuration, ceci étant déduit des données de configuration de cette plate-forme. L'éditeur fait la distinction entre une première édition d'un nouvel objet (plate-forme, produit, feuille d'informations) et donc la création d'une représentation graphique ou la mise à jour de cette représentation graphique en prenant en compte les nouveaux paramètres ou encore la destruction de l'un ou l'autre, composant ou feuille d'informations, si ces derniers sont absents dans les nouveaux paramètres.

Egalement, l'interpréteur Cl se trouvant sur la station à configurer utilise les informations et les fonctions offertes par la base de connaissances BK et, indépendament du type de plate-forme, présente une fonctionnalité de lecture double. D'une part, il lit les fichiers de configuration générés par l'éditeur dans le format déterminé, de préférence dans le format MIF, en faisant la différence entre une première configuration, une reconfiguration ou une déconfiguration, puis convertit lesdits fichiers en directives de configuration pour la plate-forme sur laquelle il est situé et ensuite effectue la configuration désirée de cette plate-forme. D'autre part, il lit la configuration effective de la plate-forme, puis génère les fichiers de configuration dans le format déterminé, de préférence dans le format MIF, contenant les informations de configuration des composants de cette plate-forme, lesdits fichiers de configuration étant alors utilisables par l'éditeur. Lors d'une configuration, l'interpréteur peut, si cela est nécessaire et désiré, renommer la machine pour la personnaliser, c'est-à-dire lui donner un nom différent de celui donné lors de sa sortie de fabrication et également, si cela est désiré, relancer la machine (commande UNIX "reboot") en fin de configuration.

Dans un mode de réalisation préféré, la station de travail sur laquelle sont implantés le concepteur CD et l'éditeur CE est une plate-forme du genre PC ou compatible PC supportant au moins un environnement système de type Windows 3.1, alors que la station à configurer comportant l'interpréteur Cl est une plate-forme UNIX.

Avantageusement, le système selon l'invention met en oeuvre un procédé de configuration de logiciels préconfigurés remarquable en ce qu'il est divisé en une pluralité de sous-procédés, un sous-procédé d'édition de la base de connaissances permettant à un utilisateur d'une station de travail d'accéder à la base de connaissances pour créer, éditer, modifier et enregistrer ladite base, un sous-procédé de détermination de la configuration permettant à un utilisateur d'une station de travail de construire une configuration désirée, un sous-procédé d'actualisation de la configuration désirée sur la station à configurer, un sous-procédé d'analyse et de contrôle de la configuration sur la station configurée et enfin un sous-procédé d'exploration de la configuration d'une station configurée à partir d'une station de travail.

Une définition plus précise de la base de connaissances et en particulier de son contenu fonctionnel permettra de mieux comprendre comment les données internes sont manipulées par les sous-procédés mis en oeuvre par le système de configuration, lesdites données contenues dans la base de connaissances décrivant les entités qui peuvent être configurées anisi que les relations entre ces entités. Suivent ainsi les explicitations relatives à une pluralité d'entités et à leurs interconnexions que la base de connaissances permet de décrire.

Un quelconque système informatique peut être modélisé au moyen d'une classe de plates-formes conçue pour identifier des plates-formes qui ont des caractéristiques de configuration similaires, sachant qu'une classe de plates-formes peut être définie par:
- un nom qui l'identifie de manière unique au sein de la base de connaissances, ce nom identifiant par exemple un type de machines et cette information de nom étant obligatoire,
- un commentaire extérieur lié à la classe de plates-formes, l'utilisateur de l'éditeur pouvant accéder à ce commentaire, cette information étant optionnelle,
- un commentaire interne lié à la classe de plates-formes, seul l'utilisateur du concepteur pouvant accéder à ce commentaire qui est interdit à l'utilisateur de l'éditeur, cette information étant optionnelle,
- un icone graphique représentant la classe de plates-formes, cette information étant optionnelle.

Le produit ou l'élément à configurer est vu comme un composant défini par la classe à laquelle il appartient. Pour cela, une classe de composants est entièrement définie par:
- un nom, information qui est obligatoire,
- un numéro de version, de forme VRMF (Version Release Maintenance Fix) qui permet d'identifier la version du composant selon un format prédéterminé et normalisé, cette information étant obligatoire. Une classe de composants est identifiée de manière unique dans la base de connaissances par la combinaison nom/version,
- une fonction d'analyse du composant exécutée sur la plate-forme UNIX analysée qui possède deux paramètres d'entrée, le nom et la version du composant, et qui retourne une valeur nulle lorsque le composant est situé sur la machine ou une valeur différente de zéro dans le cas contraire,
- un commentaire extérieur lié à la classe de composants, l'utilisateur de l'éditeur ayant accès à ce commentaire, cette information étant optionnelle,
- un commentaire interne lié à la classe de composants, seul l'utilisateur du concepteur ayant accès à ce commentaire qui est interdit à l'utilisateur de l'éditeur, cette information étant optionnelle,
- un icone graphique représentant la classe de composants, cette information étant optionnelle.

Un groupe fonctionnel est entièrement défini par les données suivantes:
- un nom de groupe fonctionnel identifiant de manière unique le groupe fonctionnel dans la base de connaissances, cette information étant obligatoire,
- une donnée précisant si le groupe fonctionnel est scalaire ou tabulaire (par défaut, le groupe fonctionnel étant scalaire), cette information étant optionnelle,
- une donnée précisant si le groupe fonctionnel est obligatoire ou non dans le composant, une instance du groupe fonctionnel obligatoire étant créée lorsque le composant est ajouté à un système par l'intermédiaire de l'éditeur,
- un commentaire extérieur lié au groupe fonctinonel, l'utilisateur de l'éditeur ayant accès à ce commentaire, cette information étant optionnelle,
- un commentaire interne lié au groupe fonctinonel, seul l'utilisateur du concepteur ayant accès à ce commentaire qui est interdit à l'utilisateur de l'éditeur, cette information étant optionnelle,
- un icone graphique représentant le groupe fonctionnel, cette information étant optionnelle.

Un attribut est entièrement défini par les données suivantes:
- le nom interne de l'attribut, unique relativement aux autres noms d'attributs,
- la syntaxe de l'attribut qui peut être choisie parmi une liste de valeurs, cette information étant obligatoire,
- un commentaire interne lié à l'attribut, seul l'utilisateur du concepteur ayant accès à ce commentaire qui est interdit à l'utilisateur de l'éditeur, cette information étant optionnelle,
- dépendant de la syntaxe, la spécification des vérifications sur la valeur entrée par l'utilisateur pour cet attribut: pour un entier une valeur minimum et/ou une valeur maximum, pour une chaîne de caractères le nombre de caractères exact ou minimum et/ou maximum, pour une liste énumérative un contrôle implicite étant exécuté et les valeurs extérieures à la liste de valeurs permises étant rejetées.

L'instrumentation de composant est une interface bas-niveau spécifique de la classe de composants et utilisée pour fixer (fonction de type "set") ou lire (fonction de type "get") une information de configuration relative à un quelconque composant de cette classe. L'instrumentation de composant est mise en oeuvre par le founisseur de composant, la définition de l'instrumentation de composant étant enregistrée dans la base de connaissances et directement liée à la classe de composants. L'instrumentation de composant pour une classe de composants est construite à partir d'un ensemble d'instrumentations appelé instrumentations de goupes fonctionnels et défini pour les groupes fonctionnels constituant cette classe de composants. Par conséquent, définir une instrumentation de composant correspond à définir une instrumentation pour chacun des groupes fonctionnels constituant la classe de composants et la mise en oeuvre d'une instrumentation de composant est donc dépendante du type de systèmes configurés avec le système de configuration. L'instrumentation d'un groupe fonctionnel peut consister soit d'un ensemble de commandes de configuration, soit de quelques fichiers de configuration et ceci, indépendament du type de plates-formes qui sont configurées. L'instrumentation d'un quelconque groupe fonctionnel qu'il est désiré intégrer au système de configuration doit suivre un ensemble de règles, ces règles sont détaillées ci-dessous pour chaque type d'instrumentation (commande/fichier). L'instrumentation de groupes fonctionnels permet d'exécuter les fonctionnalutés suivantes:
- exécuter une commande préparatoire,
- exécuter une commande postérieure,
- lire la valeur d'un ensemble d'attributs appartenant au groupe fonctionnel,
- fixer la valeur d'un ensemble d'attributs appartenant au groupe fonctionnel,
- pour un groupe fonctionnel tabulaire, créer une instance de ce groupe fonctionnel,
- pour un groupe fonctionnel tabulaire, lire une liste de toutes les instances de ce groupe fonctionnel,
- pour un groupe fonctionnel tabulaire, supprimer une ou plusieurs instances de ce groupe fonctionnel.

En ce qui concerne la configuration de plates-formes UNIX, dans certains cas, les fonctionnalités détaillées ci-avant peuvent être remplies par des commandes de configuration, en particulier, il est possible de considérer les commandes sous l'interface de SMIT qui permettent d'exécuter des tâches de configuration sur une quelconque plate-forme supportant le système d'exploitation AIX. Le système de configuration selon l'invention qui permet, bien sûr, d'utiliser de telles commandes mais de manière plus efficiente, propose en outre des règles sur les commandes définissant l'instrumentation d'un groupe fonctionnel telles que les suivantes:
- ces commandes ne sont pas interactives,
- elles permettent de correspondre et de s'harmoniser au concept SMIT, l'utilisateur du concepteur définissant pour cela, au sein des composants, des groupes fonctionnels pour autoriser la cohérence entre les commandes de configuration et ledit concept,
- la commande permettant de lire la liste des noms d'instances de groupes fonctionnels renvoie en retour ces noms de telle manière que, les noms retournés sont utilisés comme paramètres d'entrée de la commande autorisant l'exécution de la lecture et qu'il n'existe exactement qu'un seul nom d'instance de groupe fonctionnel par ligne,
- la commande permettant de lire les valeurs d'attributs pour une instance de groupe fonctionnel renvoie en retour ces valeurs selon le même format que celui de SMIT en utilisant un caractère séparateur, l'ordre de retour étant le même que l'ordre des attributs dans le groupe fonctionnel et les valeurs retournées étant montrées comme tel par l'éditeur.

Le système de configuration est conçu pour autoriser également l'intégration de composants configurés en utilisant des fichiers de configuration. Pour cela, les règles concernant l'instrumentation de fichiers sont les suivantes:
- les fichiers de configuration sont des fichiers ASCII,
- chaque groupe fonctionnel doit être instrumenté par un et un seul fichier de configuration,
- le plus petit élément d'un quelconque fichier de configuration instrumentant une instance d'un groupe fonctionnel est la ligne, ce qui signifie qu'une instance de groupe fonctionnel est représentée par au moins une ligne dans le fichier de configuration lié à ce groupe fonctionnel.

Ainsi, en concordance avec les règles précédentes, une instrumentation d'un groupe fonctionnel pour des plates-formes UNIX utilisant des fichiers de configuration est intégralement définie par (et donc stockée dans la base de connaissances):
- un nom identifiant de manière unique l'instrumentation,
- le gabarit d'instrumentation lié au fichier de configuration pour le groupe fonctionnel et spécifié par l'utilisateur du concepteur, la syntaxe de ce gabarit prenant en compte les groupes fonctionnels tabulaires,
- le nom intégral du chemin menant au répertoire où doit être lu le fichier de configuration,
- le nom intégral du chemin menant au répertoire où doit être écrit le fichier de configuration,
- le mode écriture pour le fichier de configuration: "append" si le fichier de configuration est ajouté à un fichier déjà existant sur la plte-forme configurée, ou "overwrite" si le fichier de configuration remplace un fichier déjà existant sur la plate-forme configurée.

Il y a toujours une feuille d'informations associée au groupe fonctionnel lorsque ce groupe fonctionnel est configuré en utilisant des fichiers de configuration. L'instrumentation n'a aucune influence sur la préparation de la configuration effectuée sur la station de travail, mais a une influence principalement sur les procédés appliqués pour la construction de la configuration désirée d'une plate-forme, c'est-à-dire sur les sous-procédés d'actualisation de la configuration et d'analyse et de contrôle de la configuration.

Le format utilisé doit correspondre au format des données de configuration introduites, d'un côté un quelconque élément de données de configuration est vu selon le format déterminé par l'utilisateur de l'éditeur, alors que le même élément de données de configuration est vu selon un autre format, appelé format produit, du côté interpréteur. Ce choix est régi par les instrumentations, que ces dernières utilisent des commandes ou des fichiers de configuration.

De plus, les données de configuration doivent spécifier le type de liaisons manipulées par l'utilisateur de l'éditeur, les différents types de liaisons sont intégralement définies par les données suivantes:
- un nom identifiant de manière unique le type de liaison,
- les caractéristiques de cette liaison, liaison point à point, pour la connexion d'un système à un autre système ou d'un système à un lien fédératif, liaison fédérative, pour l'interconnexion d'un ensemble de systèmes par l'intermédiaire de liaisons point à point,
- un icone graphique représentant le type de liaison, cette information étant optionnelle,
- un commentaire extérieur lié au type de liaison, l'utilisateur de l'éditeur ayant accès à ce commentaire, cette information étant optionnelle,
- un commentaire interne lié au type de liaison, seul l'utilisateur du concepteur ayant accès à ce commentaire qui est interdit à l'utilisateur de l'éditeur, cette information étant optionnelle.

Ces données doivent aussi spécifier un ensemble de composants avec leurs numéros de versions fixés de manière adéquate, spécifiques d'une classe de plates-formes également définie de manière adéquate, elles se présentent de la manière suivante:
- un nom les identifiant de manière unique,
- un nom identifiant la classe de plates-formes pour laquelle elles sont destinées à servir,
- la liste de couples nom/numéro de version identifiant chacun des composants concernés par ces données,
- un commentaire extérieur lié à cet ensemble de composants, l'utilisateur de l'éditeur ayant accès à ce commentaire, cette information étant optionnelle,
- un commentaire interne lié à cet ensemble de composants, seul l'utilisateur du concepteur ayant accès à ce commentaire qui est interdit à l'utilisateur de l'éditeur, cette information étant optionnelle.

Ce concept d'ensemble de composants est destiné à accélérer la spécification, par l'utilisateur de l'éditeur, de la présence d'un ensemble de produits sur une plate-forme, après quoi, chaque composant d'un quelconque ensemble de composants est manipulé dans so intégralité.

Ces données doivent aussi spécifier une liste de composants et sont donc utilisées pour définir, en termes de configuration, la dépendance d'un composant relativement à un ensemble de composants. Une telle dépendance en termes de configuration est identifiée par:
- le nom identifiant cette dépendance de manière unique,
- le nom identifiant toute classe de composants appartenant à cette dépendance de configuration,
- l'ensemble de numéros de version lié à cette classe de composants.

Une classe de composants est liée à une dépendance de configuration par la relation composant/dépendance.

La relation plate-forme /composant, quant à elle, permet d'obtenir la liste de tous les composants, selon la combinaison nom/version, qui peuvent être situés sur n'importe quelle plate-forme d'une classe donnée. Cette relation est intégralement définie par:
- le nom identifiant la classe de plates-formes,
- le nom de la classe de composants en relation avec cette classe de plates-formes,
- le numéro de version de la classe de composants en relation avec cette classe de plates-formes.

La relation entre une classe de plates-formes et une classe de composants est définie seulement si ces deux classes sont définies dans la base de connaissances.

Les données doivent aussi spécifier une relation composant/dépendance entre une classe de composants et une liste de classes de composants dans la base de connaissances. Cette relation exprime d'une part, les conditions préalables à remplir, relativement à d'autres composants, pour qu'un composant puise être configuré, certains composants requérant la présence d'autres composants pour être configuré et d'autre part, la compatibilité qu'un composant doit présenter, relativement à d'autres composants. Cette relation est intégralement définie par:
- le nom identifiant la classe de composants déterminée,
- le nom identifiant la dépendance de configuration liée au nom de la classe de composants déterminée.

Tout attribut est destiné à définir une partie d'une information de configuration, par conséquent, un attribut est lié à un grand nombre de groupes fonctionnels d'un même composant ou de composants différents. Réciproquement, un groupe fonctionnel est lié à un grand nombre d'attributs. Des données sont donc utilisées pour définir cette relation attribut/groupe fonctionnel, ces données sont les suivantes:
- le nom interne d'un attribut l'identifiant de manière unique,
- le nom identifiant le groupe fonctionnel lié à l'attribut,
- le nom de l'attribut dans le groupe fonctionnel, appelé nom externe de l'attribut, c'est le nom qui est affiché pour l'utilisateur de l'éditeur,
- un indicateur ou drapeau spécifiant si l'attribut est obligatoire dans le groupe fonctionnel, c'est-à-dire si une valeur de cet attribut doit être fournie lorsqu'une instance de ce groupe fonctionnel est configurée,
- un commentaire, typiquement un message d'aide, lié à l'attribut lorsque cet attribut est sollicité dans ce groupe fonctionnel, l'utilisateur de l'éditeur pouvant y accéder pour obtenir une information sur cet attribut dans le contexte d'un groupe fonctionnel, cette information étant optionnelle, lorsqu'elle n'est pas présente, le commentaire pour l'attribut étant utilisé,
- une valeur par défaut associée à l'attribut dans le groupe fonctionnel.

Il est ici à noter qu'une instance de groupe fonctionnel est nommée par la valeur du premier attribut défini pour ce groupe fonctionnel.

Une instrumentation se réfère toujours à un groupe fonctionnel d'un composant, cette relation est destinée à lier une instrumentation à un groupe fonctionnel appartenant à une classe de composants. Par conséquent, la relation entre une instrumentation d'un groupe fonctionnel et ce groupe fonctionnel est décrite par les données suivantes:
- le nom de la classe de composants intégrant le groupe fonctionnel,
- le numéro de version de cette classe de composants,
- le nom identifiant l'instrumentation,
- le nom identifiant le groupe fonctionnel lié à cette instrumentation.

Un composant est constitué d'un ensemble de groupes fonctionnels, cette relation lie un groupe fonctionnel à un composant, ce qui signifie que le groupe fonctionnel est contenu dans le composant. Par conséquent, la relation entre un groupe fonctionnel et le composant auquel il appartient est décrite par données suivantes:
- le nom identifiant le groupe fonctionnel,
- le nom de la classe de composants intégrant le groupe fonctionnel,
- le numéro de version de cette classe de composants.

Une fois ces précisions apportées relativement à la base de connaissances, il est possible de mieux appréhender l'objet des différents sous-procédés appliqués selon l'invention. Ainsi, le sous-procédé d'édition de la base de connaissances a pour but de fournir à l'utilisateur d'une station de travail de type PC un accès à la base de connaissances lui permettant de créer cette dernière à partir de rien, de l'éditer, de la modifier et de l'enregistrer.

Comme la base de connaissances est liée à une station de travail, l'utilisateur doit pouvoir conserver l'intégrité d'une station de travail à une autre station de travail afin d'éviter toute redondance en ce qui concerne les noms et les versions.

Ce sous-procédé d'édition de la base de connaissances utilise comme données d'entrée les données de la base de connaissances enregistrées dans la station de travail ainsi que les données de l'utilisateur destinées à modifier le contenu de la base de connaissances. Les données de l'utilisateur sont entrées au travers de l'interface utilisateur graphique du concepteur qui est l'interface d'entrée pour le flux de données ainsi que l'interface de contrôle. Ce sous-procédé utilise les données de la base de connaissances également comme données de sortie. L'ensemble des fonctionnalités du concepteur propres à l'interface utilisateur et aux fonctions du "noyau" ainsi que les données de l'utilisateur relatives à la configuration désirée sont utilisées. L'interface d'entrée pour le sous-procédé d'édition de la base de connaissances, en ce qui concerne les données d'entrée relatives à la base de connaissances est, par la suite et pour des besoins de simplification et de concision, appelée interface de connaissances. De cette manière, lors d'une opération de création, le traitement propre aux tâches d'initialisation de la base de connaissances est exécuté, alors que les données de sortie qui à ce moment n'existent pas correspondent à une base de connaissances vide. Egalement, lors d'une opération d'édition, les données de la base de connaissances sont prises comme données d'entrée et les données fournies en sortie sont les données de la base de connaissances éditées au travers de l'interface utilisateur graphique du concepteur. De même, lors d'une opération de modification ou suppression les données de la base de connaissances sont prises comme données d'entrée ainsi que les données de configuration désirée entrées par l'utilisateur alors que les données offertes en sortie sont les données de la base de connaissances modifiée. Enfin, lors d'une opération d'enregistrement il permet de sauvegarder la base de connaissances en enregistrant les données de ladite base de connaissances. Ce sous-procédé est entièrement exécuté par le concepteur du système de configuration et il est important ici de noter que le concepteur peut manipuler plusieurs bases de connaissances, aussi dans ce cas, l'éditeur peut lier une configuration à une base de connaissances.

Le sous-procédé de détermination d'une configuration permet de construire une configuration désirée à partir de l'éditeur du système de configuration. Une configuration pour ledit éditeur correspond à un ensemble hétérogène de plates-formes qui sont interconnectées au moyen de liaisons, cette configuration étant entrée au moyen de feuilles d'informations permettant d'identifier les composants associés à ces plates-formes, sachant qu'une configuration donnée est toujours liée à la base de connaissances.

La détermination d'une configuration est l'opération de l'utilisateur qui consiste à construire par étapes, à partir d'une configuration existante ou tout simplement d'aucune configuration, une configuration déterminée, le sous-procédé lui fournissant les moyens pour déterminer cette configuration. Pour cela, dans une première étape, l'utilisateur, de manière optionnelle, sélectionne une configuration qui est, de manière unique identifiée par un nom et un numéro de version, de préférence dans le format VRMF. Il est rappelé que, comme la configuration est exécutée sur une station de travail, l'utilisateur doit pouvoir conserver l'intégrité des configurations déterminées d'une station de travail à une autre station de travail. Dans une seconde étape, il construit ou modifie à l'écran la topologie du réseau, c'est-à-dire spécifie les plates-formes et les connecte au réseau au moyen de liaisons. Puis dans une troisième étape, sélectionne une plate-forme, spécifie les composants qui sont installés sur cette plate-forme, définit les instances des groupes fonctionnels et, pour chaque instance entre des informations de configuration dans les feuilles d'informations adéquates. Cette opération est répétée pour chaque plate-forme que l'utilisateur désire configurer ou associer dans la configuration d'ensemble. Enfin dans une quatrième étape, il réalise la configuration en engendrant les fichiers de configuration de type MIF qui sont distribués sur chaque plate-forme configurée.

Pour préciser, l'interface de contrôle est l'interface utilisateur graphique de l'éditeur. L'ensemble des fonctionnalités de l'éditeur propres à l'interface utilisateur et aux fonctions du "noyau", quelques fonctionnalités propres au "noyau" du concepteur pour l'accès à la base de connaissances ainsi que les données de l'utilisateur relatives à la configuration désirée sont utilisées. Ainsi, les données d'entrée utiles à l'application du sous-procédé de détermination d'une configuration sont les suivantes:
- la base de connaissances enregistrée sur la station de travail de type PC, l'interface permettant d'accéder à cette base est l'interface de connaissances,
- les données de topologie et les données de configuration qui sont entrées par l'utilisateur par l'intermédiaire de l'interface utilisateur graphique de l'éditeur,
- le nom de la configuration, si une configuration déjà existante est éditée, cette donnée étant optionnelle.

De cette manière, lors d'une opération de création, le traitement relatif à l'initialisation de toute configuration est exécuté, alors que les données de sortie, qui à ce moment n'existent pas, correspondent à une configuration vide, une lecture d'informations de la base de connaissances étant nécessaire au travers de l'interface de connaissances. Egalement, lors d'une opération d'édition, le nom de la configuration entré par l'intermédiaire de l'interface utilisateur graphique de l'éditeur ainsi que les données de la base de connaissances par l'intermédiaire de l'interface de connaissances sont pris comme données d'entrée de même que l'ensemble des données correspondant à des configurations déjà existantes sont aussi pris comme données d'entrée desquelles il est extrait la configuration désirée par l'utilisateur, alors que les données fournies en sortie par l'intermédiaire de l'interface utilisateur graphique de l'éditeur correspondent à la configuration désirée par l'utilisateur. De même, lors d'une opération de modification de la topologie et des informations de configuration, les données de configuration entrées par l'utilisateur par l'intermédiaire de l'interface utilisateur graphique de l'éditeur sont prises comme données d'entrée, pour fournir une configuration modifiée qui est éditée au travers de l'interface utilisateur graphique de l'éditeur, l'opération de modification de topologie fournissant la topologie et l'opération de modification des informations de configuration fournissant la topologie configurée. Enfin, lors d'une opération de réalisation de la configuration, la topologie configurée est prise comme données d'entrée et la configuration désirée est éditée par l'intermédiaire de l'interface utilisateur graphique de l'éditeur, ladite configuration étant enregistrée dans un ensemble de fichiers de configuration, de préférence de type MIF, au travers de l'interface d'écriture des fichiers de configuration. Les fichiers de configuration contiennent les informations suivantes:
- les informations de configuration entrées par l'utilisateur,
- la structure des composants qui sont configurés,
- l'instrumentation.

Dans cet environnement complexe en mode client-serveur, il peut être précisé à cet endroit, qu'avantageusement l'éditeur fournit, entre autres, un mécanisme mettant en oeuvre la gestion de l'unicité d'un objet et donc de données à travers le réseau représenté. Grâce à ce mécanisme, un utilisateur qui prépare une configuration sur une station de travail du système de configuration, ne doit entrer qu'une et une seule fois les mêmes données de configuration.

Pour cela, ce mécanisme d'unicité de la configuration permet de propager la valeur d'un attribut, lié à une instance d'un groupe fonctionnel, vers d'autres attributs liès à d'autres instances de groupes fonctionnels, que ces instances soient situées sur le même système ou non. Par conséquent, des ensembles d'attributs sont définis dans une configuration donnée en partageant la même valeur, et chaque fois qu'un attribut est modifié par l'utilisateur, tous les attributs appartenant à un même ensemble sont automatiquement modifiés. Ainsi, comme chaque attribut est identifié, de manière interne et unique, par un nom interne, les attributs communs à différents groupes fonctionnels auront le même nom interne, c'est cette caractéristique qui est utilisée pour mettre en oeuvre l'unicité de la configuration. Les informations suivantes qui sont liées à un attribut, permettent d'identifier à quel groupe fonctionnel il appartient:
- au regard du système, le nom du système sur lequel le groupe fonctionnel considéré est situé,
- au regard de la classe de composants, le nom de la classe de composants renfermant le groupe fonctionnel considéré,
- au regard de l'identifiant de l'instance de groupe fonctionnel, le nom de l'instance du groupe fonctionnel considéré,
- au regard du nom externe, le nom externe de l'attribut dans le groupe fonctionnel considéré.

La partie d'information concernant l'identifiant de l'instance de groupe fonctionnel doit être spécifiée puisque plusieurs instances du même groupe fonctionnel partagent le même identifiant d'attribut. La partie d'information concernant le système doit être spécifiée lorsqu'une valeur d'attribut propre à un système est distribuée sur un autre système. L'unicité de la configuration est rendue effective par l'éditeur au moment où l'utilisateur remplit les feuilles d'informations avec les données de configuration. Il est à noter que cette unicité ne doit pas être limitée par le format des données d'entrée. En effet, pour l'utilisateur de l'éditeur les mêmes données de configuration entrées pour différents groupes fonctionnels doivent avoir le même format, mais du point de vue de l'instrumentation, les mêmes données de configuration entrées pour configurer différents groupes fonctionnels peuvent avoir un format différent. Ce problème de format est avantageusement résolu par l'infrastructure de communications du système de configuration et plus particulièrement grâce aux instrumentations. De fait et comme cela a été précédemment explicité, le format utilisé doit correspondre au format des données de configuration introduites, d'un côté un quelconque élément de données de configuration est vu selon le format déterminé par l'utilisateur de l'éditeur, alors que le même élément de données de configuration est vu selon un autre format, appelé format produit, du côté interpréteur. Ce choix est régi par les instrumentations, que ces dernières utilisent des commandes ou des fichiers de configuration.

Le sous-procédé d'actualisation de la configuration désirée permet de réaliser de manière effective ladite configuration sur la station à configurer adéquate à partir de la configuration préparée par le sous-procédé de détermination de la configuration. Cette fonctionnalité du système de configuration est mise en oeuvre par l'interpréteur de la station UNIX à configurer. Ce sous-procédé a pour objet de convertir la réalisation abstraite de la configuration obtenue par application du sous-procédé de détermination de la configuration en une configuration réelle d'une station désirée configurée. Après application de ce sous-procédé, ladite station est configurée de manière nouvelle, comme préparée, et ceci à partir, lorsque cela est désiré, d'une quelconque configuration antérieure. Ce sous-procédé permet de prendre en compte tout type de configuration, une première configuration (pas de configuration antérieure), une reconfiguration qui est une nouvelle configuration obtenue à partir d'une configuration antérieure, ou une déconfiguration c'est-à-dire une configuration antérieure reprise en ayant supprimé certains éléments de cette configuration.

L"interface de contrôle de ce sous-procédé est en fait l'interpréteur de la station à configurer. Pour l'application de ce sous-procédé, les différents éléments utilisés ou à prendre en considération sont les suivants:
- l'utilisateur qui est responsable du lancement du sous-procédé, sachant qu'une fois lancé, ce sous-procédé ne requiert plus d'intervention humaine,
- l'interpréteur qui met en oeuvre ce sous-procédé,
- éventuellement l'outil SMIT sur une plate-forme AIX qui permet aussi de lancer ce sous-procédé qui peut, en outre, être lancé à partir d'un interpréteur de commandes (appelé par l'homme du métier "shell") par l'intermédiaire d'une interface de ligne de commande (CLI) pour des plates-formes UNIX (AIX ou non).

Les données d'entrée et l'interface de ce sous-procédé sont constituées des éléments suivants:
- les fichiers de configuration, de préférence de type MIF, décrivant d'une part, la configuration que le sous-procédé installe et d'autre part les éléments de la base de connaissances utilisés par l'interpréteur, les fichiers de configuration étant accédés au travers d'une interface spécifique à l'interpréteur,
- la configuration effective du produit, c'est-à-dire toutes les données de configuration pour tous les produits de la station, cette configuration étant conservée et accessible dans la station dans des fichiers de configuration spécifiques, l'interface permettant d'accéder à ces données d'entrée étant constituée d'un ensemble de commandes spécifiques,
- le nom de la station à configurer entré par l'utilisateur, ce nom correspond au nom du système spécifié dans la configuration préparée par le sous-procédé de détermination de la configuration.

Les données de sortie et l'interface de ce sous-procédé sont constituées des éléments suivants:
- la nouvelle configuration effective du produit qui est, comme la précédente, conservée et accessible dans la station dans des fichiers de configuration spécifiques,
- les enregistrements de la configuration effective, c'est-à-dire les enregistrements contenant les informations relatives à l'analyse des tâches de configuration effectivement exécutées comportant également l'ensemble des lignes et des résultats de commandes.

Lors de l'application de ce sous-procédé, trois opérations sont successivement effectuées, une opération de vérification de la configuration réellement installée, une opération d'analyse de la configuration effective relativement aux contenus des fichiers de configuration et enfin une opération d'activation de la configuration désirée.

L'opération de vérification de la configuration consiste à effectuer les vérifications relativement à ce qui est réellement installé sur la station, pour cela, sont utilisées des fonctions d'analyse décrites dans les fichiers de configuration transmis pour vérifier la totale cohérence entre la configuration effective de la station et les informations contenues dans les fichiers de configuration, de préférence de type MIF, en termes de contenus de produit et de numéros de version. Par conséquent, les données d'entrée sont ici le nom du système ainsi que les éléments de la base de connaissances contenus dans les fichiers de configuration.

L'opération d'analyse de la configuration effective consiste à comparer la configuration effective de la station aux contenus des fichiers de configuration en générant les actions appropriées. Pour cela, pour chaque composant dont la description est donnée dans les fichiers de configuration, les contenus desdits fichiers de configuration sont comparés à la configuration effective. Egalement, pour chaque groupe fonctionnel de chaque composant listé dans les fichiers de configuration les instances réellement configurées sont déterminées, si les instances sont configurées mais ne sont pas présentes dans les fichiers de configuration, elles sont supprimées, si les instances sont présentes dans les fichiers de configuration mais ne sont pas configurées, elles sont créées, si les instances sont à la fois configurées et présentes dans les fichiers de configuration, elles sont modifiées. Puis, lorsque c'est nécessaire, c'est-à-dire pour une création ou une modification, les mots-clés spécifiant les instrumentations sont remplacés par les valeurs trouvées dans les fichiers de configuration. Enfin, il est déterminé l'ordre suivant lequel la configuration des groupes fonctionnels dans un composant et la configuration des composants sont effectuées.

L'opération d'activation de la configuration désirée consiste à lancer la configuration à partir des données d'entrée constituées par les informations résultant de l'opération d'analyse précédente. Lancer la configuration signifie installer les fichiers de configuration à la bonne place sur la station configurée et exécuter les commandes de configuration récupérées lors de l'opération d'analyse précédente.

Le sous-procédé d'analyse et de contrôle de la configuration sur la station configurée permet de récupérer la configuration de cette station et de fournir les informations de configuration dans un format aisément accessible au sous-procédé d'exploration de la configuration d'une station configurée à partir d'une station de travail. Cette fonctionnalité du système de configuration est mise en oeuvre par l'interpréteur de la station UNIX configurée. L'interface de contrôle de ce sous-procédé est donc l'interpréteur de la station configurée. Pour l'application de ce sous-procédé, les différents éléments utilisés ou à prendre en considération sont les suivants:
- l'utilisateur qui est responsable du lancement du sous-procédé, sachant qu'une fois lancé, ce sous-procédé ne requiert plus d'intervention humaine,
- l'interpréteur qui met en oeuvre ce sous-procédé sur une station configurée déterminée,
- éventuellement l'outil SMIT sur une plate-forme AIX qui permet aussi d'appeler ce sous-procédé qui peut, en outre, être lancé à partir d'un interpréteur de commandes ("shell") par l'intermédiaire d'une interface de ligne de commande (CLI) pour des plates-formes UNIX (AIX ou non).

Les données d'entrée et l'interface de ce sous-procédé sont constituées des éléments suivants:
- la partie de la base de connaissances décrivant les stations UNIX, l'accès à cette base étant permis par l'intermédiaire d'une interface spécifique à l'interpréteur qui est la même que l'interface utilisée par le sous-procédé d'actualisation de la configuration désirée, cette partie de la base de connaissances représentée dans les fichiers de configuration, de préférence de type MIF, comprenant: la liste de tous les composants (noms et versions) contenus dans la base de connaissances incluant la fonction d'analyse des composants, la description des groupes fonctionnels concernés ainsi que les instrumentations liées aux groupes fonctionnels,
- la configuration effective du produit, c'est-à-dire les données de configuration pour tous les produits de la station, cette configuration étant conservée et accessible dans la station dans des fichiers de configuration spécifiques, l'interface permettant d'accéder à ces données d'entrée étant constituée d'un ensemble de commandes spécifiques également appelées instrumentations de composants, les instrumentations de composants étant récupérées dans la partie de la base de connaissances déterminée pour le présent sous-procédé.

Les données de sortie et l'interface de ce sous-procédé sont constituées des fichiers de configuration, de préférence de type MIF, décrivant la configuration de la station analysée, ces fichiers de configuration contenant les informations de configuration des composants installés sur la station.

Lors de l'application de ce sous-procédé, trois opérations sont successivement effectuées, une opération d'analyse de la station, une opération de lecture des données de configuration et enfin d'une opération de création des fichiers de configuration.

L'opération d'analyse de la station consiste à déterminer la liste des composants installés sur la station analysée et récupérer le nom et la version de chaque composant à l'aide de la fonction d'analyse récupérée dans la base de connaissances. Par conséquent, les données d'entrée sont ici les données de la base de connaissances contenues dans les fichiers de configuration et les données de sortie sont la liste des composants.

L'opération de lecture des données de configuration consiste à récupérer lesdites données de configuration propres aux produits installés sur la station, les données d'entrée sont donc:
- les données de la base de connaissances dans lesquelles, pour chaque composant sont extraits: d'une part pour les groupes fonctionnels dont la configuration est mise en oeuvre par des commandes, les commandes permettant de lire la liste des instances des groupes fonctionnels constituant le composant ainsi que pour chaque instance de groupe fonctionnel, la liste des valeurs d'attributs et d'autre part pour les groupes fonctionnels dont la configuration est mise en oeuvre par les fichiers de configuration, lesdits fichiers de configuration,
- la liste des composants situés sur la station analysée fournie lors de l"opération d'analyse de la station.

Les données de sortie fournies pour effectuer l'opération de création des fichiers de configuration sont alors les données de configuration des produits présentées dans un format interne.

L'opération de création des fichiers de configuration consiste à prendre, comme données d'entrée, les données de sortie générées lors de l'opération de lecture des données de configuration et à exécuter les tâches suivantes:
- pour chaque composant, construire l'ensemble des fichiers de configuration, de préférence de type MIF, contenant les données de configuration dudit composant dans un format déterminé,
- pour l'ensemble des composants, construire l'arbre de tous les fichiers de configuration dans le format déterminé,
- enregistrer cet arbre à un emplacement spécifié par l'utilisateur.

Le sous-procédé d'exploration de la configuration d'une station configurée à partir d'une station de travail permet d'éditer, sur l'éditeur de cette station de travail, une configuration d'une quelconque station configurée et analysée. Ce sous-procédé permet d'insérer la configuration de la station analysée dans une configuration éditée sur la station de travail, insérer signifiant ici:
- afficher la configuration de la station analysée dans le dessin de la configuration,
- relier la configuration de la station analysée dans la représentation du réseau, étant donné les données de configuration de ce système,
- fournir l'édition des données de configuration récupérées à l'interface utilisateur graphique.

Ce sous-procédé qui a des caractéristiques en commun avec l'opération d'édition effectuée lors de l'application du sous-procédé de détermination de la configuration est donc mis en oeuvre par l'éditeur. L'interface de contrôle de ce sous-procédé est ainsi l'interface utilisateur graphique de l'éditeur, de même, l'ensemble des fonctionnalités de l'éditeur propres à l'interface utilisateur et aux fonctions du "noyau", quelques fonctionnalités propres au "noyau" du concepteur pour l'accès à la base de connaissances ainsi que les données de l'utilisateur relatives à la configuration désirée sont utilisées. Ainsi, les données d'entrée utiles à l'application de ce sous-procédé d'exploration sont les suivantes:
- la base de connaissances enregistrée sur la station de travail de type PC, l'interface permettant d'accéder à cette base étant l'interface de connaissances,
- les fichiers de configuration, de préférence de type MIF, générés par le sous-procédé d'analyse et de contrôle de la configuration sur la station configurée, lus au travers de l'interface de lecture des fichiers de configuration,
- les structures de données spécifiant la configuration éditée dans laquelle la configuration de la station analysée est insérée.

Les données de sortie fournies par le sous-procédé d'exploration spécifient la configuration éditée dans laquelle la configuration de la station analysée a été ajoutée.

Lors de l'application de ce sous-procédé, trois opérations sont successivement effectuées, une opération de lecture des données de configuration, une opération de connexion dans le réseau représenté et enfin une opération d'affichage.

L'opération de lecture des données de configuration consiste à, d'une part, vérifier que la configuration est adaptée à la base de connaissances et d'autre part, remplir les structures de données internes avec les contenus des fichiers de configuration, ces structures de données représentant la configuration de la station analysée étant utilisées pour effectuer les opérations subséquentes de connexion et d'affichage. Pour cela, les données d'entrée utilisées sont les données de la base de connaissances et les fichiers de configuration accédés au travers de l'interface de lecture des fichiers de configuration.

L'opération de connexion dans le réseau représenté consiste à examiner la configuration éditée ainsi que les données de configuration de la station analysée et à déterminer les liaisons permettant de connecter la station analysée aux autres stations présentes dans la configuration éditée. Pour cela, les données d'entrée utilisées sont les structures de données représentant la configuration éditée et les structures de données représentant les données de configuration de la station analysée. Cette opération de connexion modifie les structures de données représentant la configuration éditée, lorsque les liaisons sont effectuées.

L'opération d'affichage consiste à dessiner la nouvelle topologie après insertion de la station analysée en incluant en premier lieu, la représentation graphique de la station analysée, en second lieu, la représentation graphique des liaisons permettant de connecter la station analysée au réseau, en troisième lieu, la représentation des données de configuration de la station analysée dans les feuilles d'informations. Pour cela, les données d'entrée utilisées sont les structures de données représentant la configuration éditée, modifiées par l'opération de connexion précédente.

Les principales interactions entre ces différents sous-procédés sont ci-après explicitées. Une première interaction ainsi existe, lors du passage du sous-procédé de détermination de la configuration au sous-procédé d'actualisation de la configuration désirée pour l'exécution de la préparation de la configuration, de sa distribution et de sa détermination effective. Les fichiers de configuration sont générés par le sous-procédé de détermination de la configuration, la totalité des fichiers de configuration est alors transférée de la station de travail vers la station à configurer dans laquelle est mis en oeuvre le sous-procédé d'actualisation de la configuration désirée, soit au moyen de disquettes, soit en utilisant des moyens électroniques de transfert de fichiers. Ces fichiers sont des fichiers ASCII et le même ensemble de fichiers est transféré vers toutes les stations concernées par la configuration désirée. Avec une application UNIX, lorsqu'un transfert de fichiers est réalisé par l'intermédiaire d'une disquette, les fichiers sont copiés sur chacune des stations concernées par le sous-procédé d'actualisation de la configuration désirée en utilisant une commande UNIX (dosread). Les fichiers de configuration de type MIF contiennent toutes les informations nécessaires à la configuration des stations concernées par cette configuration, le contenu de ces fichiers, pour tous les composants à configurer, est le suivant:
- la description des groupes fonctionnels liés,
- les instrumentations liées aux groupes fonctionnels,
- les données de configuration, pour les groupes fonctionnels configurés,
- l'ordre de configuration entre les groupes fonctionnels et les composants, cet ordre étant extrait de la base de connaissances.

Une seconde interaction est décrite relativement au passage du sous-procédé d'analyse et de contrôle de la configuration vers le sous-procédé d'exploration de la configuration d'une station configurée à partir d'une station de travail pour exécuter l'analyse de la configuration. Les fichiers de configuration de type MIF contenant les données de la base de connaissances sont nécessaires à l'application du sous-procédé d'analyse et de contrôle de la configuration. C'est à l'utilisateur de fournir ces fichiers et de spécifier leur emplacement sur les stations. De plus, l'éditeur donne à l'utilisateur la possibilité de produire les fichiers de configuration de type MIF contenant les données de la base de connaissances, pour une quelconque station, et de les insérer sur une disquette ou autre. Ces fichiers de configuration de type MIF contiennent toutes les informations nécessaires pour extraire la configuration effective d'une quelconque station, le contenu de ces fichiers est le suivant:
- la liste de tous les composants contenus dans la base de connaissances, incluant la fonction d'analyse des composants,
- la description des groupes fonctionnels liés,
- les instrumentations liées aux groupes fonctionnels.

Le sous-procédé d'analyse et de contrôle de la configuration génère les fichiers de configuration de type MIF représentant la configuration de la station analysée et les range dans le répertoire spécifié par l'utilisateur. La structure de ces fichiers de configuration de type MIF est la même que celle générée par l'éditeur. La totalité des fichiers est transférée de la station analysée par le sous-procédé d'analyse et de contrôle de la configuration vers la station de travail en utilisant soit des disquettes, soit des moyens électroniques de transfert de fichiers. Avec une application UNIX, lorsqu'un transfert de fichiers est réalisé par l'intermédiaire d'une disquette, les fichiers sont copiés sur les disquettes par le sous-procédé d'actualisation de la configuration désirée en utilisant une commande UNIX (doswrite).

Une troisième interaction existe lors du passage du sous-procédé d'édition de la base de connaissances vers les divers sous-procédés qui nécessitent des accès à la base de connaissances manipulée par ledit sous-procédé d'édition, les interactions étant effectuées au travers de l'interface de connaissances.

Pour conclure, le système de configuration de logiciels préconfigurés sur des systèmes ouverts et le procédé mis en oeuvre conformément à l'invention permettent de réaliser une configuration automatique de logiciels sur des serveurs ou machines travaillant dans des environnements complexes en mode client-serveur selon une architecture distribuée et offre un service de configuration global aux utilisateurs désirant déployer rapidement un grand nombre de systèmes à partir d'un seul point. A partir d'un seul point, d'une même console d'une station de travail, il est possible de préparer une configuration de référence qui peut être dupliquée sur différentes stations, ou de configurer de manière spécifique une quelconque station, d'un ensemble hétérogène sur le réseau, l'interpréteur, de manière intelligente, à la différence de ce qui se passait dans l'art antérieur, se chargeant de discriminer automatiquement entre les paramètres initiaux de configuration et les paramètres propres à la configuration désirée en choisissant de manière adéquate et automatique ces derniers. La configuration désirée de la station est préparée sur la console d'un microordinateur en utilisant une application conviviale du type "Windows" pour remplir une ou plusieurs "feuilles" d'informations sur l'écran relative à la topologie et aux différents paramètres désirés, et ceci tout simplement par sélection sur l'écran pour dessiner la topologie du réseau, fixer toute sorte de paramètres et ainsi créer l'image de la configuration souhaitée, diffusée, après génération de fichiers de configuration, vers la machine sur laquelle elle sera chargée pour être exécutée, l'interpréteur permettant ce chargement et faisant avantageusement la distinction entre ce qui existe et ce qui est désiré, alors qu'en outre, cette configuration peut être contrôlée et consultée à partir du microordinateur. L'adaptabilité et l'intelligence de l'interpréteur font qu'il est capable d'identifier la configuration présente et en fonction de la configuration transmise désirée, de reconnaître s'il s'agit d'une première configuration, d'une reconfiguration ou encore d'une déconfiguration pour effectuer alors la commande appropriée. Il est aussi possible de configurer de manière automatique des serveurs similaires pour compléter ou modifier une infrastructure, simplement à partir de moyens de chargement connus. Grâce à ce nouveau concept homogène et centralisé de configuration par commande, l'ouverture à de nouveaux objets configurables est autorisée facilitant tout déploiement ou migration aujourd'hui non permis, y compris le déploiement d'applications d'un client intégrateur de service. Cette dernière caractéristique d'extensibilité est rendue possible du fait que des dialogues de configuration et des commandes spécifiques peuvent être aisément créés et qu'ainsi de nouveaux objets peuvent être ajoutés via le concepteur dont c'est précisément l'objet. Une telle avantageuse convivialité était jusqu'à présent interdite aux réseaux de systèmes hétérogènes en environnement distribué. Parmi les nombreux avantages présentés, il est possible de citer l'extrême simplicité d'utilisation et d'application des procédures de configuration, tandis qu'une meilleure visibilité de la configuration installée est offerte, le graphique de ladite configuration étant directement affichée sur l'écran. Egalement, le temps d'apprentissage pour l'utilisation de telles procédures ainsi donc que le savoir-faire nécessaire à leur exécution peuvent être considérablement réduits et ceci même relativement à un large déploiement de systèmes dupliqués ou non dans des sites aléatoirement et géographiquement distribués. De plus, la productivité et l'efficacité sont très nettement améliorées puisque l'administrateur permet de configurer facilement et rapidement les systèmes en réseau sans oublier que l'automatisation du processus et les possibilités de duplication sont bien supérieures permettant ainsi de réduire les coûts et les délais. Une configuration globale cohérente associée au fait qu'une plus faible technicité est requise pour installer le logiciel implique nécessairement, pour l'administrateur, un meilleur contrôle de la gestion du déploiement des systèmes, ce qui a pour principal effet d'améliorer la fiabilité de l'ensemble. En outre, une très grande autonomie est autorisée à un client utilisateur qui, achetant un progiciel, pourra l'installer lui-même et ceci de manière immédiate, car il n'aura plus besoin systématiquement d'une assistance technique. Enfin, avantageusement, dans cet environnement complexe en mode client-serveur, l'éditeur fournit des mécanismes puissants et pratiques tels que notamment des mécanismes de gestion de l'unicité d'un objet et donc de données à travers le réseau représenté.

## Revendications

1. Système de configuration de logiciels préconfigurés sur des systèmes ouverts en réseau dans un environnement distribué, **caractérisé en ce qu'**il est constitué, d'une part sur une station de travail, d'un dispositif de conception appelé concepteur (CD), d'un éditeur (CE) et d'une base de connaissances (KB), et d'autre part sur une station à configurer d'un interpréteur (Cl), le concepteur (CD) permettant d'accéder en lecture et écriture à la base de connaissances (KB) contenant les données décrivant les différents éléments du réseau qui peuvent être configurés et les liaisons entre ces différents éléments, ledit concepteur (CD) permettant de définir les différentes possibilités de configuration de l'éditeur (CE) sur lequel est visualisée la configuration désirée, éditeur (CE) qui utilise les informations de la base de connaissances (KB) relatives à la topologie du réseau et les paramètres de configuration des différents éléments composant le réseau pour construire une entité homogène configurable et chargeable, à l'aide de moyens de chargement, sur la station à configurer dans laquelle l'interpréteur (Cl) exécute les opérations de configuration en transformant les paramètres de configuration initiaux en des paramètres propres à la configuration désirée également utilisables par l'éditeur (CE), ledit système mettant en oeuvre un procédé de configuration de logiciels préconfigurés.

2. Système de configuration de logiciels préconfigurés selon la revendication 1, **caractérisé en ce que** le concepteur (CD) utilise une interface utilisateur graphique du type "Windows" qui permet de définir de nouvelles classes de plates-formes définissant un type de système et de nouvelles classes de composants de systèmes pour étendre les informations de la base de connaissances (KB) utilisées par l'éditeur (CE), en offrant pour cela la possibilité de définir, modifier ou supprimer des classes de plates-formes, également de définir, modifier ou supprimer des classes de composants de systèmes et les feuilles d'informations associées à ces classes et enfin relativement aux classes de composants, de définir, modifier ou supprimer des informations des classes de plates-formes relatives à la configuration désirée.

3. Système de configuration de logiciels préconfigurés selon la revendication 1, **caractérisé en ce que** l'éditeur (CE) utilise une interface utilisateur graphique du type "Windows" qui, en premier lieu, foumit des moyens graphiques à l'utilisateur pour construire à l'écran une topologie du réseau représentant l'ensemble des systèmes hétérogènes avec leurs interconnexions, pour chaque système représenté une feuille ou un ensemble de feuilles d'informations de configuration étant rempli, qui également fournit des mécanismes de sauvegarde, d'ouverture et de restauration des configurations définies par l'utilisateur ainsi que des mécanismes de gestion de l'unicité d'un objet à travers le réseau représenté, qui de plus, pour une configuration spécifiée par l'utilisateur, génère un ensemble de fichiers de configuration dans un format déterminé, ces fichiers étant utilisés pour générer une information de configuration qui est exécutée sur la plate-forme désirée configurée et enfin qui, à partir d'un ensemble de fichiers de configuration récupéré sur une plate-forme configurée, extrait la configuration réelle de cette plate-forme.

4. Système de configuration de logiciels préconfigurés selon la revendication 1, **caractérisé en ce que** l'interpréteur (Cl) d'une part, lit les fichiers de configuration générés par l'éditeur dans le format déterminé en faisant la différence entre une première configuration, une reconfiguration ou une déconfiguration, puis convertit lesdits fichiers en directives de configuration pour la plate-forme sur laquelle il est situé et enfin effectue la configuration désirée de cette plate-forme et d'autre part, lit la configuration effective de la plate-forme, puis génère les fichiers de configuration dans le format déterminé contenant les informations de configuration des composants de cette plate-forme, lesdits fichiers de configuration étant alors utilisables par l'éditeur.

5. Procédé de configuration de logiciels préconfigurés mis en oeuvre par le système de configuration selon l'une quelconque des revendications précédentes, **caractérisé en ce qu'**il est divisé en une pluralité de sous-procédés, un sous-procédé d'édition de la base de connaissances (KB) permettant à un utilisateur d'une station de travail d'accéder à la base de connaissances (KB) pour créer, éditer, modifier et enregistrer ladite base, un sous-procédé de détermination de la configuration permettant à un utilisateur d'une station de travail de construire une configuration désirée, un sous-procédé d'actualisation de la configuration désirée sur la station à configurer, un sous-procédé d'analyse et de contrôle de la configuration sur la station configurée et enfin un sous-procédé d'exploration de la configuration d'une station configurée à partir d'une station de travail.

6. Procédé de configuration de logiciels préconfigurés selon la revendication 5, **caractérisé en ce que** le sous-procédé d'édition de la base de connaissances (KB), exécuté par le concepteur (CD) de la station de travail, utilise comme données d'entrée les données de la base de connaissances (KB) enregistrées dans la station de travail et introduites au travers d'une interface dite de connaissances ainsi que les données de l'utilisateur destinées à modifier le contenu de la base de connaissances (KB), les données de l'utilisateur étant entrées au travers de l'interface utilisateur graphique du concepteur (CD) qui est l'interface d'entrée pour le flux de données ainsi que l'interface de contrôle, les données de la base de connaissances (KB) étant alors utilisées comme données de sortie, tandis que l'ensemble des fonctionnalités du concepteur (CD) et les données de l'utilisateur relatives à la configuration désirée sont utilisées pour, lors d'une première opération de création, exécuter le traitement propre à l'initialisation de la base de connaissances (KB), les données de sortie n'existant pas, la base de connaissances (KB) étant vide, lors d'une seconde opération d'édition, prendre les données de la base de connaissances (KB) comme données d'entrée et fournir en sortie les données de la base de connaissances (KB) éditées au travers de l'interface utilisateur graphique du concepteur, lors d'une troisième opération de modification, prendre les données de la base de connaissances (KB) comme données d'entrée ainsi que les données de configuration désirée entrées par l'utilisateur pour offrir en sortie la base de connaissances (KB) modifiée et enfin, lors d'une quatrième opération d'enregistrement, sauvegarder en enregistrant les données de la base de connaissances (KB).

7. Procédé de configuration de logiciels préconfigurés selon l'une des revendications 5 et 6, **caractérisé en ce que** le sous-procédé de détermination de la configuration permet à un utilisateur de l'éditeur (CE) d'une station de travail de construire une configuration désirée qui correspond à un ensemble hétérogène de plates-formes interconnectées au moyen de liaisons, cette configuration étant entrée au moyen de feuilles d'informations permettant d'identifier les composants associés à ces plates-formes, l'interface de contrôle étant l'interface utilisateur graphique de l'éditeur (CE), tandis que l'ensemble des fonctionnalités de l'éditeur (CE), quelques fonctionnalités du concepteur (CD) pour l'accès à la base de connaissances (KB) ainsi que les données de l'utilisateur relatives à la configuration désirée sont utilisées pour, lors d'une première opération de création, exécuter le traitement relatif à l'initialisation de toute configuration, les données de sortie n'existant pas, la configuration étant vide, lors d'une seconde opération d'édition, prendre le nom de la configuration entré par l'intermédiaire de l'interface utilisateur graphique de l'éditeur (CE) ainsi que les données de la base de connaissances (KB) par l'intermédiaire de l'interface de connaissances comme données d'entrée de même que l'ensemble des données correspondant à des configurations déjà existantes desquelles il est extrait la configuration désirée par l'utilisateur, alors que les données fournies en sortie par l'intermédiaire de l'interface utilisateur graphique de l'éditeur (CE) correspondent à la configuration désirée par l'utilisateur, lors d'une troisième opération de modification de la topologie et des informations de configuration, prendre les données de configuration entrées par l'utilisateur par l'intermédiaire de l'interface utilisateur graphique de l'éditeur (CE) comme données d'entrée, pour fournir une configuration modifiée éditée au travers de l'interface utilisateur graphique de l'éditeur, l'opération de modification de topologie foumissant la topologie et l'opération de modification des informations de configuration fournissant la topologie configurée et enfin, lors d'une quatrième opération de réalisation de la configuration, prendre la topologie configurée comme données d'entrée et éditer la configuration désirée par l'intermédiaire de l'interface utilisateur graphique de l'éditeur (CE), ladite configuration étant enregistrée dans un ensemble de fichiers de configuration au travers de l'interface d'écriture des fichiers de configuration.

8. Procédé de configuration de logiciels préconfigurés selon l'une des revendications 5 à 7, **caractérisé en ce que** le sous-procédé d'actualisation de la configuration désirée, est mis en oeuvre par l'interpréteur (Cl) sur la station à configurer en faisant la différence entre une première configuration, une reconfiguration ou une déconfiguration, l'interpréteur (Cl) étant également l'interface de contrôle alors que les données d'entrée et l'interface de ce sous-procédé sont constituées, en premier lieu, de fichiers de configuration décrivant d'une part, la configuration que le sous-procédé installe et d'autre part les éléments de la base de connaissances (KB) utilisés par l'interpréteur (Cl), l'accès aux fichiers de configuration étant permis au travers d'une interface spécifique à l'interpréteur (Cl), en second lieu, de la configuration effective du produit, conservée et accessible dans la station dans des fichiers de configuration spécifiques, l'interface permettant d'accéder à ces données d'entrée étant constituée d'un ensemble de commandes spécifiques, en troisième lieu, du nom de la station à configurer entré par l'utilisateur, tandis que les données de sortie et l'interface de ce sous-procédé sont constituées d'une part, de la nouvelle configuration effective du produit qui, comme la précédente, est conservée et accessible dans la station dans des fichiers de configuration spécifiques, et d'autre part, d'enregistrements de la configuration effective, les données d'entrée et de sortie étant utilisées de telle manière que, lors d'une première opération de vérification de la configuration réellement installée, il vérifie la totale cohérence entre la configuration effective de la station et les informations contenues dans les fichiers de configuration, lors d'une seconde opération d'analyse de la configuration effective relativement aux contenus des fichiers de configuration, il compare la configuration effective de la station aux contenus des fichiers de configuration en générant les actions appropriées, et enfin lors d'une troisième opération d'activation de la configuration désirée, il lance la configuration à partir des données d'entrée constituées par les informations résultant de l'opération d'analyse précédente en installant les fichiers de configuration à la bonne place sur la station configurée et en exécutant les commandes de configuration récupérées lors de l'opération d'analyse précédente.

9. Procédé de configuration de logiciels préconfigurés selon l'une des revendications 5 à 8, **caractérisé en ce que** le sous-procédé d'analyse et de contrôle de la configuration mis en oeuvre par l'interpréteur (CI) de la station configurée permet de récupérer la configuration de cette station et de fournir les informations de configuration dans un format aisément accessible au sous-procédé d'exploration de la configuration d'une station configurée à partir d'une station de travail, l'interpréteur (Cl) étant également l'interface de contrôle alors que les données d'entrée et l'interface de ce sous-procédé sont constituées, d'une part, de la partie de la base de connaissances (KB) décrivant les stations, l'accès à cette base étant permis par l'intermédiaire d'une interface spécifique à l'interpréteur (Cl) qui est la même que l'interface utilisée par le sous-procédé d'actualisation de la configuration désirée, et, d'autre part, de la configuration effective du produit, cette configuration étant conservée et accessible dans la station dans des fichiers de configuration spécifiques, l'interface permettant d'accéder à ces données d'entrée étant constituée d'un ensemble de commandes spécifiques, tandis que les données de sortie et l'interface de ce sous-procédé sont constituées des fichiers de configuration décrivant la configuration de la station analysée, les données d'entrée et de sortie étant utilisées de telle manière que, lors d'une première opération d'analyse de la station, il détermine la liste des composants installés sur la station analysée et récupère le nom et la version de chaque composant, les données d'entrée étant donc les données de la base de connaissances (KB) contenues dans les fichiers de configuration et les données de sortie étant la liste des composants, lors d'une seconde opération de lecture des données de configuration, il récupère lesdites données de configuration propres aux produits installés sur la station, les données d'entrée étant donc les données de la base de connaissances (KB) et la liste des composants situés sur la station analysée fournie lors de l'opération d'analyse de la station et les données de sortie étant alors les données de configuration des produits présentées dans un format interne, et enfin lors d'une troisième opération de création des fichiers de configuration, il prend comme données d'entrée les données de sortie générées lors de l'opération de lecture des données de configuration et, en premier lieu, pour chaque composant, construit l'ensemble des fichiers de configuration contenant les données de configuration dudit composant dans un format déterminé, en second lieu, pour l'ensemble des composants, construit l'arbre de tous les fichiers de configuration dans le format déterminé, alors qu'en troisième lieu, il enregistre cet arbre à un emplacement spécifié par l'utilisateur.

10. Procédé de configuration de logiciels préconfigurés selon l'une des revendications 5 à 9, **caractérisé en ce que** le sous-procédé d'exploration de la configuration d'une station configurée mis en oeuvre par l'éditeur (CE) d'une station de travail permet d'éditer, sur cette station de travail, une configuration d'une quelconque station configurée et analysée en insérant la configuration de la station analysée dans une configuration éditée sur la station de travail, l'interface de contrôle étant l'interface utilisateur graphique de l'éditeur (CE), tandis que l'ensemble des fonctionnalités de l'éditeur (CE), quelques fonctionnalités du concepteur (CD) pour l'accès à la base de connaissances (KB) ainsi que les données de l'utilisateur relatives à la configuration désirée sont utilisées, alors que les données d'entrée sont, en premier lieu, les données de la base de connaissances (KB) enregistrée sur la station de travail, l'interface permettant d'accéder à cette base étant l'interface de connaissances, en second lieu, les fichiers de configuration générés par le sous-procédé d'analyse et de contrôle de la configuration sur la station configurée, lus au travers de l'interface de lecture des fichiers de configuration, et en troisième lieu, les structures de données spécifiant la configuration éditée dans laquelle la configuration de la station analysée est insérée, tandis que les données de sortie fournies par le sous-procédé d'exploration spécifient la configuration éditée dans laquelle la configuration de la station analysée a été ajoutée, les données d'entrée et de sortie étant utilisées de telle manière que, lors d'une première opération de lecture des données de configuration, il vérifie que la configuration est adaptée à la base de connaissances (KB) puis, remplit les structures de données internes avec les contenus des fichiers de configuration, les données d'entrée étant alors les données de la base de connaissances (KB) et les fichiers de configuration accédés au travers de l'interface de lecture des fichiers de configuration, lors d'une seconde opération de connexion dans le réseau représenté, il examine la configuration éditée ainsi que les données de configuration de la station analysée et détermine les liaisons permettant de connecter la station analysée aux autres stations présentes dans la configuration éditée, les données d'entrée étant alors les structures de données représentant la configuration éditée et les structures de données représentant les données de configuration de la station analysée, cette opération de connexion modifiant les structures de données représentant la configuration éditée, lorsque les liaisons sont effectuées, et enfin lors d'une troisième opération d'affichage, il dessine la nouvelle topologie après insertion de la station analysée en incluant en premier lieu, la représentation graphique de la station analysée, en second lieu, la représentation graphique des liaisons permettant de connecter la station analysée au réseau, en troisième lieu, la représentation des données de configuration de la station analysée dans les feuilles d'informations, les données d'entrée étant alors les structures de données représentant la configuration éditée, modifiées par l'opération de connexion précédente.

## Claims

1. System for configuration of preconfigured software on open networked systems in a distributed environment, **characterised in that** it is constituted, on the one hand, on a workstation, by a design device known as a designer (CD), an editor (CE) and a knowledge base (KB) and, on the other hand, on a station to be configured by an interpreter (Cl), the designer (CD) making it possible to access, in read and write mode, the knowledge base (KB) containing the data describing the various elements of the network that can be configured and the links between these various elements, said designer (CD) making it possible to define the various possibilities of configuration of the editor (CE) on which the desired configuration is displayed, which editor (CE) uses the information from the knowledge base (KB) relating to the topology of the network and the configuration parameters of the various elements making up the network in order to construct a homogenous entity that can be configured and loaded, using loading means, on the station to be configured in which the interpreter (Cl) executes the configuration operations by transforming the initial configuration parameters into parameters specific to the desired configuration that can also be used by the editor (CE), said system implementing a method for configuration of preconfigured software.

2. System for configuration of preconfigured software according to Claim 1, **characterised in that** the designer (CD) uses a "Windows"-type graphical user interface that makes it possible to define new classes of platforms defining a system type and new classes of system components for extending the information from the knowledge base (KB) used by the editor (CE), while offering, for this purpose, the possibility of defining, modifying or removing classes of platforms, and also of defining, modifying or removing classes of system components and the information sheets associated with these classes and, finally, relative to the classes of components, of defining, modifying or removing information on the classes of platforms related to the desired configuration.

3. System for configuration of preconfigured software according to Claim 1, **characterised in that** the editor (CE) uses a "Windows"-type graphical user interface which, in the first place, provides the user with graphical means for constructing on screen a topology of the network representing all the heterogeneous systems together with their interconnections, a configuration information sheet or set of sheets being completed for each represented system, which also supplies mechanisms for saving, opening and restoring user-defined configurations, together with mechanisms for managing the uniqueness of an object via the represented network, which also, for a user-specified configuration, generates a set of configuration files in a predetermined format, these files being used for generating configuration information that is executed on the desired configured platform and, finally, which uses a set of configuration files recovered from a configured platform to extract the actual configuration of that platform.

4. System for configuration of preconfigured software according to Claim 1, **characterised in that** the interpreter (Cl) on the one hand reads the configuration files generated by the editor in the predetermined format, distinguishing between an initial configuration, a reconfiguration or a deconfiguration, then converts said files into configuration directives for the platform on which it is located and finally performs the desired configuration of said platform and, on the other hand, reads the effective configuration of the platform then generates the configuration files in the predetermined format containing the configuration information for the components of that platform, said configuration files then being usable by the editor.

5. Method for configuration of preconfigured software implemented by the configuration system according to any one of the preceding claims, **characterised in that** it is divided into a plurality of sub-methods, a sub-method for editing the knowledge base (KB) making it possible for a user of a workstation to access the knowledge base (KB) in order to create, edit, modify and record said base, a sub-method for determination of the configuration allowing a workstation user to construct a desired configuration, a sub-method for updating the desired configuration on the station to be configured, a sub-method for analysing and monitoring the configuration on the configured station and, finally, a sub-method for exploring the configuration of a configured station from a work station.

6. Method for configuration of preconfigured software according to Claim 5, **characterised in that** the sub-method for editing the knowledge base (KB), executed by the designer (CD) of the workstation, uses as input data the data of the knowledge base (KB) recorded in the workstation and entered via what is known as a knowledge interface, together with the user data intended for modifying the content of the knowledge base (KB), the user data being entered via the graphical user interface of the designer (CD), which is the input interface for the data flow and also the monitoring interface, the data of the knowledge base (KB) then being used as output data, whilst the set of standard functions of the designer (CD) and the user data relating to the desired configuration are used, in a first creation operation, for executing the processing specific to the initialisation of the knowledge base (KB), there being no output data, since the knowledge base (KB) is empty, in a second edition operation, for taking the data from the knowledge base (KB) as input data and outputting the data of the knowledge base (KB) edited via the graphical user interface of the designer, in a third modification operation, for taking the data of the knowledge base (KB) as input data together with the desired configuration data entered by the user so as to output the modified knowledge base (KB) and, finally, in a fourth recording operation, for saving and recording the data of the knowledge base (KB).

7. Method for configuration of preconfigured software according to one of Claims 5 and 6, **characterised in that** the sub-method for determination of the configuration allows a user of the editor (CE) of a workstation to construct a desired configuration that corresponds to a heterogeneous set of platforms interconnected by means of links, this configuration being entered by means of information sheets making it possible to identify the components associated with these platforms, the monitoring interface being the graphical user interface of the editor (CE), whilst the set of standard functions of the editor (CE), some standard functions of the designer (CD) for access to the knowledge base (KB) and also the user data relating to the desired configuration are used, in a first creation operation, for executing the processing related to the initialisation of any configuration, there being no output data, since the configuration is empty, in a second editing operation, for taking the name of the configuration entered via the graphical user interface of the editor (CE) together with the data from the knowledge base (KB) via the knowledge interface as input data as well as the set of data corresponding to configurations already in existence, from which the configuration desired by the user is extracted, while the data that are output via the graphical user interface of the editor (CE) correspond to the configuration desired by the user, in a third operation of modifying the configuration information and topology, for taking the configuration data entered by the user via the graphical user interface of the editor (CE) as input data, in order to supply a modified configuration edited via the graphical user interface of the editor, the topology-modification operation supplying the topology and the configuration information-modification operation supplying the configured topology and, finally, in a fourth operation of realization of the configuration, for taking the configured topology as input data and editing the desired configuration via the graphical user interface of the editor (CE), said configuration being recorded in a set of configuration files via the writing interface for the configuration files.

8. Method for configuration of preconfigured software according to one of Claims 5 to 7, **characterised in that** the sub-method for updating the desired configuration is implemented by the interpreter (Cl) on the station to be configured, distinguishing between an initial configuration, a reconfiguration or a deconfiguration, the interpreter (Cl) also being the monitoring interface while the input data and the interface of this sub-method are constituted, in the first place, by configuration files describing, on the one hand, the configuration installed by the sub-method and, on the other hand, the elements of the knowledge base (KB) used by the interpreter (Cl), access to the configuration files being permitted via an interface specific to the interpreter (Cl), in the second place, by the effective configuration of the product, preserved and accessible in the station in the specific configuration files, the interface that allows access to these input data being constituted by a set of specific commands, in the third place, by the name of the station to be configured entered by the user, whilst the output data and the interface of this sub-method are constituted on the one hand by the new effective configuration of the product, which - like the preceding one - is preserved and accessible in the station in the specific configuration files and, on the other hand, by records of the effective configuration, the input and output data being used in such a way that, in a first operation of verification of the configuration as actually installed, it verifies the total coherence between the effective configuration of the station and the information contained in the configuration files, in a second operation of analysing the effective configuration relative to the content of the configuration files, it compares the effective configuration of the station with the contents of the configuration files by generating the appropriate actions, and finally in a third operation of activating the desired configuration, it launches the configuration on the basis of the input data constituted by the information resulting from the preceding analysis operation by installing the configuration files in the right place on the configured station and by executing the configuration commands recovered during the preceding analysis operation.

9. Method for configuration of preconfigured software according to one of Claims 5 to 8, **characterised in that** the sub-method for analysing and monitoring the configuration implemented by the interpreter (Cl) of the configured station makes it possible to recover the configuration of that station and to supply the configuration information in an easily accessible format to the sub-method for exploring the configuration of a station configured from a workstation, the interpreter (Cl) also being the monitoring interface while the input data and the interface of this sub-method are constituted, on the one hand, by the portion of the knowledge base (KB) describing the stations, access to this base being permitted via an interface specific to the interpreter (Cl), which is the same as the interface used by the sub-method for updating the desired configuration and, on the other hand, by the effective configuration of the product, this configuration being preserved and accessible in the station in specific configuration files, the interface that allows access to these input data being constituted by a set of specific commands, while the output data and the interface of this sub-method are constituted by configuration files describing the configuration of the analysed station, the input and output data being used in such a way that, in a first operation of analysing the station, it determines the list of the components installed on the analysed station and recovers the name and version of each component, the input data therefore being the data from the knowledge base (KB) contained in the configuration files and the output data being the list of components, in a second operation for reading the configuration data, it recovers said configuration data specific to the products installed on the station, the input data therefore being the data from the knowledge base (KB) and the list of components situated on the analysed station supplied in the operation of analysing the station and the output data therefore being the configuration data for the products presented in an internal format and finally, in a third operation for creating configuration files, it takes as input data the output data generated in the operation for reading the configuration data and, in the first place, for each component, constructs the set of configuration files containing the configuration data of said component in a predetermined format, in the second place, for all the components, it constructs the tree of all the configuration files in the predetermined format while, in the third place, it records this tree at a location specified by the user.

10. Method for configuration of preconfigured software according to one of Claims 5 to 9, **characterised in that** the sub-method for exploring the configuration of a configured station implemented by the editor (CE) of a workstation makes it possible to edit, on that workstation, a configuration of any configured and analysed station by inserting the configuration of the analysed station into a configuration edited on the workstation, the monitoring interface being the graphical user interface of the editor (CE), whilst the set of standard functions of the editor (CE), some functionalities of the designer (CD) for accessing the knowledge base (KB) together with the user data relating to the desired configuration are used, whereas the input data are, in the first place, the data from the knowledge base (KB) recorded on the workstation, the interface that allows access to this base being the knowledge interface, in second place, the configuration files generated by the sub-method for analysing and monitoring the configuration on the configured station, read via the interface for reading the configuration files and, in the third place, the data structures specifying the edited configuration in which the configuration of the analysed station is inserted, whilst the output data supplied by the exploration sub-method specify the edited configuration in which the configuration of the analysed station has been added, the input and output data being used in such a way that, in a first operation of reading the configuration data, it verifies that the configuration is adapted to the knowledge base (KB) then fills the internal data structures with the contents of the configuration files, the input data then being the data from the knowledge base (KB) and the configuration files accessed via the interface for reading the configuration files, in a second operation of connection in the represented network, it examines the edited configuration together with the configuration data of the analysed station and determines the links that allow the analysed station to be connected to the other stations present in the edited configuration, the input data then being the data structures representing the edited configuration and the data structures representing the configuration data of the analysed station, this connection operation modifying the data structures representing the edited configuration, when the links are made and finally, in a third display operation, it draws the new topology after insertion of the analysed station by including, in the first place, the graphical representation of the analysed station, in the second place, the graphical representation of the links allowing the analysed station to be connected to the network, in the third place, the representation of the configuration data of the analysed station in the information sheets, the input data then being the data structures representing the edited configuration, as modified by the preceding connection operation.

## Patentansprüche

1. System für die Konfiguration vorkonfigurierter Software in offenen Netzsystemen in einer verteilten Umgebung, **dadurch gekennzeichnet, daß** es einerseits in einer Workstation aus einer Konzeptionsvorrichtung, die Konzeptor (CD) genannt wird, einem Editor (CE) und einer Wissensbank (KB) und andererseits in einer zu konfigurierenden Station aus einem Interpreter (CI) gebildet ist, wobei der Konzeptor (CD) ermöglicht, zum Lesen und Schreiben auf die Wissensbank (KB) zuzugreifen, die die Daten enthält, die die verschiedenen Elemente des Netzes, die konfiguriert werden können, und die Verbindungen zwischen diesen verschiedenen Elementen beschreiben, wobei der Konzeptor (CD) ermöglicht, die verschiedenen Konfigurationsmöglichkeiten des Editors (CE), auf dem die gewünschte Konfiguration angezeigt wird, zu definieren, wobei der Editor (CE) die Informationen der Wissensbank (KB) in bezug auf die Netztopologie und die Konfigurationsparameter der das Netz aufbauenden verschiedenen Elemente verwendet, um eine konfigurierbare und mit Hilfe von Lademitteln ladbare homogene Entität in der zu konfigurierenden Station zu konstruieren, in der der Interpreter (CI) die Konfigurationsoperationen ausführt, indem er die anfänglichen Konfigurationsparameter in Parameter transformiert, die der gewünschten Konfiguration eigentümlich sind und die auch vom Editor (CE) verwendbar sind, wobei das System ein Verfahren für die Konfiguration vorkonfigurierter Software ausführt.

2. System für die Konfiguration vorkonfigurierter Software nach Anspruch 1, **dadurch gekennzeichnet, daß** der Konzeptor (CD) eine graphische Anwenderschnittstelle des Typs "Windows" verwendet, die ermöglicht, neue Klassen von Plattformen, die einen Systemtyp definieren, und neue Klassen von Systemkomponenten zu definieren, um die vom Editor (CE) verwendeten Informationen der Wissensbank (KB) zu erweitern, indem die Möglichkeit geboten wird, Klassen von Plattformen zu definieren, zu modifizieren oder zu unterdrücken, außerdem Klassen von Systemkomponenten und diesen Klassen zugeordnete Informationsblätter zu definieren, zu modifizieren oder zu unterdrücken und schließlich in bezug auf die Komponentenklassen Informationen der Klassen von Plattformen bezüglich der gewünschten Konfiguration zu definieren, zu modifizieren oder zu unterdrücken.

3. System für die Konfiguration vorkonfigurierter Software nach Anspruch 1, **dadurch gekennzeichnet, daß** der Editor (CE) eine graphische Anwenderschnittstelle des Typs "Windows" verwendet, die an erster Stelle für den Anwender graphische Mittel schafft, um auf dem Bildschirm eine Netztopologie zu konstruieren, die die Gesamtheit der heterogenen Systeme mit ihren Zwischenverbindungen repräsentiert, wobei für jedes repräsentierte System ein Blatt oder eine Gesamtheit von Blättern mit Konfigurationsinformationen ausgefüllt ist, außerdem Sicherungs-, Öffnungs- und Wiederherstellungsmechanismen für vom Anwender definierte Konfigurationen sowie Mechanismen für die Steuerung der Einzigartigkeit eines Objekts im repräsentierten Netz schafft, darüber hinaus für eine vom Anwender spezifizierte Konfiguration eine Gesamtheit von Konfigurationsdateien in einem bestimmten Format erzeugt, wobei diese Dateien dazu verwendet werden, Konfigurationsinformationen zu erzeugen, die auf der konfigurierten gewünschten Plattform ausgeführt werden, und schließlich anhand einer auf der konfigurierten Plattform wiedergewonnenen Gesamtheit von Konfigurationsdateien die reale Konfiguration dieser Plattform extrahiert.

4. System für die Konfiguration vorkonfigurierter Software nach Anspruch 1, **dadurch gekennzeichnet, daß** der Interpreter (CI) einerseits die vom Editor in dem bestimmten Format erzeugten Konfigurationsdateien liest, indem er die Differenz mit einer ersten Konfiguration, einer Rekonfiguration oder einer Dekonfiguration bildet, dann die Dateien in Konfigurationsrichtlinien für die Plattform, auf der er sich befindet, konvertiert und schließlich die gewünschte Konfiguration dieser Plattform ausführt, und andererseits die effektive Konfiguration der Plattform liest und dann die Konfigurationsdateien in dem bestimmten Format, die die Konfigurationsinformationen der Komponenten dieser Plattform enthalten, erzeugt, wobei die Konfigurationsdateien anschließend vom Editor verwendbar sind.

5. Verfahren für die Konfiguration vorkonfigurierter Software, das von dem Konfigurationssystem nach einem der vorhergehenden Ansprüche ausgeführt wird, **dadurch gekennzeichnet, daß** es in mehrere Unterverfahren unterteilt ist, ein Unterverfahren für die Editierung der Wissensbasis (KB), das einem Anwender einer Workstation ermöglicht, auf die Wissensbank (KB) zuzugreifen, um die Bank zu erzeugen, zu editieren, zu modifizieren und Eintragungen in sie vorzunehmen, ein Unterverfahren für die Bestimmung der Konfiguration, das einem Anwender einer Workstation ermöglicht, eine gewünschte Konfiguration zu konstruieren, ein Unterverfahren für die Aktualisierung der gewünschten Konfiguration in der zu konfigurierenden Station, ein Unterverfahren für die Analyse und Steuerung der Konfiguration in der konfigurierten Station und schließlich ein Unterverfahren für die Untersuchung der Konfiguration einer konfigurierten Station anhand einer Workstation.

6. Verfahren für die Konfiguration vorkonfigurierter Software nach Anspruch 5, **dadurch gekennzeichnet, daß** das Unterverfahren für die Editierung der Wissensbank (KB), das vom Konzeptor (CD) der Workstation ausgeführt wird, als Eingangsdaten die Daten der Wissensbank (KB) verwendet, die in der Workstation aufgezeichnet sind und über eine sogenannte Wissensschnittstelle eingegeben werden, sowie die Daten des Anwenders verwendet, die dazu bestimmt sind, den Inhalt der Wissensbank (KB) zu modifizieren, wobei die Daten des Anwenders über die graphische Anwenderschnittstelle des Konzeptors (CD) eingegeben werden, die die Eingabeschnittstelle für den Datenfluß sowie die Steuerschnittstelle ist, wobei die Daten der Wissensbank (KB) dann als Ausgangsdaten verwendet werden, während die Gesamtheit der Funktionalitäten des Konzeptors (CD) und die Daten des Anwenders bezüglich der gewünschten Konfiguration verwendet werden, um in einer ersten Operation der Erzeugung die eigentliche Verarbeitung bei der Initialisierung der Wissensbank (KB) auszuführen, bei der die Ausgangsdaten nicht vorhanden sind und die Wissensbank (KB) leer ist, in einer zweiten Operation der Editierung die Daten der Wissensbank (KB) als Eingangsdaten zu verwenden und am Ausgang die editierten Daten der Wissensbank (KB) über die graphische Anwenderschnittstelle des Konzeptors zu liefern, in einer dritten Operation der Modifizierung die Daten der Wissensbank (KB) sowie die vom Anwender eingegebenen Daten der gewünschten Konfiguration als Eingangsdaten zu verwenden, um am Ausgang die modifizierte Wissensbank (KB) anzubieten, und in einer vierten Operation der Aufzeichnung die Daten der Wissensbank (KB) durch Aufzeichnen zu sichern.

7. Verfahren für die Konfiguration vorkonfigurierter Software nach einem der Ansprüche 5 und 6, **dadurch gekennzeichnet, daß** das Unterverfahren für die Bestimmung der Konfiguration einem Anwender des Editors (CE) einer Workstation ermöglicht, eine gewünschte Konfiguration zu konstruieren, die einer heterogenen Gesamtheit von über Verbindungen miteinander verbundenen Plattformen entspricht, wobei diese Konfiguration über Informationsblätter eingegeben wird, die die Identifizierung der diesen Plattformen zugeordneten Komponenten ermöglichen, wobei die Steuerschnittstelle die graphische Anwenderschnittstelle des Editors (CE) ist, während die Gesamtheit der Funktionalitäten des Editors (CE), einige Funktionalitäten des Konzeptors (CD) für den Zugriff auf die Wissensbank (KB) sowie die Daten des Anwenders bezüglich der gewünschten Konfiguration verwendet werden, um in einer ersten Operation der Erzeugung die auf die Initialisierung der gesamten Konfiguration bezogene Verarbeitung auszuführen, bei der keine Ausgangsdaten vorhanden sind und die Konfiguration leer ist, in einer zweiten Operation der Editierung den Namen der Konfiguration, der über die graphische Anwenderschnittstelle des Editors (CE) eingegeben wird, sowie die Daten der Wissensbank (KB) über die Wissensschnittstelle ebenso wie die Gesamtheit der . Daten, die den bereits vorhandenen Konfigurationen entspricht, aus denen die vom Anwender gewünschte Konfiguration extrahiert wird, als Eingangsdaten zu verwenden, während die Daten, die am Ausgang über die graphische Anwenderschnittstelle des Editors (CE) geliefert werden, der vom Anwender gewünschten Konfiguration entsprechen, in einer dritten Operation des Modifizierens der Topologie und der Informationen der Konfiguration die vom Anwender über die graphische Anwenderschnittstelle des Editors (CE) eingegebenen Konfigurationsdaten als Eingangsdaten zu verwenden, um eine modifizierte Konfiguration zu liefern, die über die graphische Anwenderschnittstelle des Editors editiert worden ist, wobei die Operation des Modifizierens der Topologie die Topologie liefert und die Operation des Modifizierens der Informationen der Konfiguration die konfigurierte Topologie liefert, und schließlich in einer vierten Operation des Verwirklichens der Konfiguration die konfigurierte Topologie als Eingangsdaten zu verwenden und die gewünschte Konfiguration über die graphische Anwenderschnittstelle des Editors (CE) zu editieren, wobei die Konfiguration in einer Gesamtheit von Konfigurationsdateien über die Schnittstelle zum Schreiben der Konfigurationsdateien aufgezeichnet wird.

8. Verfahren für die Konfiguration vorkonfigurierter Software nach einem der Ansprüche 5 bis 7, **dadurch gekennzeichnet, daß** das Unterverfahren für die Aktualisierung der gewünschten Konfiguration vom Interpreter (CI) in der Workstation ausgeführt wird, indem die Differenz zwischen einer ersten Konfiguration, einer Rekonfiguration oder einer Dekonfiguration gebildet wird, wobei der Interpreter (CI) außerdem die Steuerschnittstelle ist, während die Eingangsdaten und die Schnittstelle dieses Unterverfahrens an erster Stelle aus Konfigurationsdaten gebildet sind, die einerseits die Konfiguration, die das Unterverfahren installiert, und andererseits die Elemente der Wissensbank (KB), die vom Interpreter (CI) verwendet werden, beschreibt, wobei der Zugriff auf die Konfigurationsdateien über eine für den Interpreter (CI) spezifische Schnittstelle erlaubt wird, an zweiter Stelle aus der effektiven Konfiguration des Produkts gebildet sind, die in der Station in spezifischen Konfigurationsdateien bewahrt und zugänglich sind, wobei die Schnittstelle, die den Zugriff auf diese Eingangsdaten ermöglicht, aus einer Gesamtheit spezifischer Befehle gebildet ist, und an dritter Stelle aus dem Namen der zu konfigurierenden Station, der vom Anwender eingegeben wird, gebildet sind, während die Ausgangsdaten und die Schnittstelle dieses Unterverfahrens einerseits aus der neuen effektiven Konfiguration des Produkts gebildet sind, die wie die vorhergehende in der Station in spezifischen Konfigurationsdateien bewahrt und zugänglich sind, und andererseits aus Aufzeichnungen der effektiven Konfiguration gebildet sind, wobei die Eingangs- und Ausgangsdaten in der Weise verwendet werden, daß in einer ersten Operation des Verifizierens der wirklich installierten Konfiguration die Gesamtkohärenz zwischen der effektiven Konfiguration der Station und den in den Konfigurationsdateien enthaltenen Informationen verifiziert wird, in einer zweiten Operation des Analysierens der effektiven Konfiguration in bezug auf die Inhalte der Konfigurationsdateien die effektive Konfiguration der Station mit den Inhalten der Konfigurationsdateien verglichen werden, indem geeignete Aktionen erzeugt werden, und schließlich in einer dritten Operation des Aktivierens der gewünschten Konfiguration die Konfiguration anhand der Eingangsdaten gestartet wird, die durch die aus der vorhergehenden Analyseoperation resultierenden Informationen gebildet sind, indem die Konfigurationsdateien an einem geeigneten Ort in der konfigurierten Station installiert werden und indem die bei der vorhergehenden Analyseoperation wiedergewonnenen Konfigurationsbefehle ausgeführt werden.

9. Verfahren für die Konfiguration vorkonfigurierter Software nach einem der Ansprüche 5 bis 8, **dadurch gekennzeichnet, daß** das Unterverfahren des Analysierens und des Steuerns der Konfiguration, die vom Interpreter (CI) der konfigurierten Station ausgeführt wird, die Wiedergewinnung der Konfiguration dieser Station und die Lieferung der Konfigurationsinformationen in einem Format ermöglicht, auf das das Unterverfahren der Untersuchung der Konfiguration einer konfigurierten Station ausgehend von einer Workstation einfach zugreifen kann, wobei der Interpreter (CI) außerdem die Steuerschnittstelle ist, während die Eingangsdaten und die Schnittstelle dieses Unterverfahrens einerseits aus dem Teil der Wissensbank (KB), der die Stationen beschreibt, gebildet sind, wobei der Zugriff auf diese Bank über eine für den Interpreter (CI) spezifische Schnittstelle ermöglicht wird, die die gleiche wie jene Schnittstelle ist, die von dem Unterverfahren für die Aktualisierung der gewünschten Konfiguration verwendet wird, und andererseits aus der effektiven Konfiguration des Produkts gebildet sind, wobei diese Konfiguration in der Station in spezifischen Konfigurationsdateien bewahrt und zugänglich ist, wobei die Schnittstelle, die den Zugriff auf diese Eingangsdaten ermöglicht, aus einer Gesamtheit spezifischer Befehle gebildet ist, während die Ausgangsdaten und die Schnittstelle dieses Unterverfahrens aus Konfigurationsdateien, die die analysierte Konfiguration der Station beschreiben, gebildet sind, wobei die Eingangs- und Ausgangsdaten in der Weise verwendet werden, daß in einer ersten Operation des Analysierens der Station die Liste der in der analysierten Station installierten Komponenten bestimmt wird und der Name und die Version jeder Komponente wiedergewonnen wird, wobei die Eingangsdaten somit die Daten der Wissensbank (KB) sind, die in den Konfigurationsdateien enthalten sind, und die Ausgangsdaten die Liste der Komponenten bilden, in einer zweiten Operation des Lesens der Konfigurationsdaten die den in der Station installierten Produkten eigentümlichen Konfigurationsdaten wiedergewonnen werden, wobei die Eingangsdaten somit die Daten der Wissensbank (KB) und die Liste der in der analysierten Station vorhandenen Komponenten, die in der Operation der Analyse der Station geliefert werden, sind, wobei die Ausgangsdaten dann die Konfigurationsdaten der Produkte sind, die in einem internen Format präsentiert werden, und schließlich in einer dritten Operation des Erzeugens der Konfigurationsdateien als Eingangsdaten die in der Operation des Lesens der Konfigurationsdaten erzeugten Ausgangsdaten verwendet werden und an erster Stelle für jede Komponente die Gesamtheit der Konfigurationsdateien, die die Konfigurationsdaten der Komponente in einem bestimmten Format enthalten, konstruiert wird und an zweiter Stelle für die Gesamtheit der Komponenten der Baum aller Konfigurationsdateien in dem bestimmten Format konstruiert wird, während an dritter Stelle dieser Baum an einem vom Anwender spezifizierten Ort aufgezeichnet wird.

10. Verfahren für die Konfiguration vorkonfigurierter Software nach einem der Ansprüche 5 bis 9, **dadurch gekennzeichnet, daß** das Unterverfahren der Untersuchung der Konfiguration einer konfigurierten Station, das vom Editor (CE) einer Workstation ausgeführt wird, ermöglicht, in dieser Workstation eine Konfiguration irgendeiner konfigurierten und analysierten Station zu editieren, indem die Konfiguration der analysierten Station in eine editierte Konfiguration in der Workstation eingefügt wird, wobei die Steuerschnittstelle die graphische Anwenderschnittstelle des Editors (CE) ist, während die Gesamtheit der Funktionalitäten des Editors (CE), einige Funktionalitäten des Konzeptors (CD) für den Zugriff auf die Wissensbank (KB) sowie die Daten des Anwenders in bezug auf die gewünschte Konfiguration verwendet werden, während die Eingangsdaten an erster Stelle die Daten der Wissensbank (KB) sind, die in der Workstation aufgezeichnet ist, wobei die Schnittstelle, die den Zugriff auf diese Bank ermöglicht, die Wissensschnittstelle ist, an zweiter Stelle die Konfigurationsdateien sind, die von dem Unterverfahren der Analyse und der Steuerung der Konfiguration in der konfigurierten Station erzeugt werden und über die Schnittstelle zum Lesen der Konfigurationsdateien gelesen werden, und an dritter Stelle die Strukturen von Daten sind, die die editierte Konfiguration spezifizieren, in die die Konfiguration der analysierten Station eingefügt wird, während die Ausgangsdaten, die von dem Untersuchungs-Unterverfahren geliefert werden, die editierte Konfiguration spezifizieren, zu der die Konfiguration der analysierten Station hinzugefügt worden ist, wobei die Eingangs- und Ausgangsdaten in der Weise verwendet werden, daß in einer ersten Operation des Lesens der Konfigurationsdaten verifiziert wird, daß die Konfiguration an die Wissensbank (KB) angepaßt ist, dann die internen Datenstrukturen mit den Inhalten der Konfigurationsdateien gefüllt werden, wobei die Eingangsdaten dann die Daten der Wissensbank (KB) und die Konfigurationsdateien sind, auf die über die Schnittstelle zum Lesen der Konfigurationsdateien zugegriffen wird, in einer zweiten Operation des Herstellens von Verbindungen im dargestellten Netz die editierte Konfiguration sowie die Konfigurationsdaten der analysierten Station untersucht werden und die Verbindungen bestimmt werden, die die Verbindung der analysierten Station mit den anderen in der editierten Konfiguration vorhandenen Stationen ermöglichen, wobei die Eingangsdaten dann die Datenstrukturen, die die editierte Konfiguration repräsentieren, und die Datenstrukturen, die die Daten der Konfiguration der analysierten Station repräsentieren, sind, wobei diese Operation des Herstellens von Verbindungen die Datenstrukturen, die die editierte Konfiguration repräsentieren, modifiziert, wenn die Verbindungen ausgeführt werden, und schließlich in einer dritten Operation des Anzeigens die neue Topologie nach der Einfügung der analysierten Station gezeichnet wird, indem an erster Stelle die graphische Darstellung der analysierten Station aufgenommen wird, an zweiter Stelle die graphische Darstellungen der Verbindungen aufgenommen wird, die den Anschluß der analysierten Station an das Netz ermöglichen, an dritter Stelle die Darstellung der Konfigurationsdaten der analysierten Station in den Informationsblättern aufgenommen wird, wobei die Eingangsdaten dann die Datenstrukturen sind, die die editierte Konfiguration repräsentieren und durch die vorhergehende Operation des Herstellens von Verbindungen modifiziert worden sind.
